# EUROPEAN PATENT SPECIFICATION

(11) **EP 3 135 740 B1**
(45) Date of publication and mention of the grant of the patent: **10.10.2018**
(21) Application number: 15183193.0
(22) Date of filing: 31.08.2015
(51) Int. Cl.: C09J 121/00, C09J 101/00, C09J 129/00, C09J 131/00, C09J 163/00, C09J 171/00, C09J 175/00, C08G 18/48, C08G 18/64, C08G 18/78, C08G 18/80, C08G 18/40, C09J 101/10

(54) **CURABLE COMPOSITION, ESPECIALLY FOR RUBBER TO SUBSTRATE BONDING**
HÄRTBARE ZUSAMMENSETZUNG, INSBESONDERE FÜR GUMMI ZUR SUBSTRATBINDUNG
COMPOSITION DURCISSABLE, NOTAMMENT POUR LA LIAISON D'UN CAOUTCHOUC À UN SUBSTRAT

(43) Date of publication of application: 01.03.2017
(73) Proprietor: Henkel AG & Co. KGaA, 40589 Düsseldorf (DE)
(72) Inventor: WEIMAR, Wolfgang, 63454 Hanau (DE); HORNUNG, Martin, 69120 Heidelberg (DE); BEIRICH, Christian, 68647 Biblis (DE); RYZHOVA Anna, 69120 Heidelberg (DE)

(56) References cited:
- WO-A1-2011/029752
- WO-A1-2014/040644
- WO-A1-2014/040645
- WO-A1-2015/024727
- US-A- 4 892 756
- US-A1- 2003 176 567
- US-A1- 2008 319 105
- US-A1- 2009 062 411

## Description

The subject matter is a new curable composition comprising at least one hydroxyl-group containing resin, at least one nitroso-containing compound or at least one nitroso precursor compound, at least one hydrophopic silica and at least one blocked isocyanate, which provides excellent adhesion and steam resistance for rubber to substrate bonds. These compositions can especially be used as one coat systems.

The conventional state of the art for bonding rubber to metal are two coat systems. These systems have a time-consuming application process, since two layers needs to be applied. Additionally such systems cause evaporation of cross linker during the vulcanization process, which leads to mould fouling, cuts in final product and health issues.

WO 2014/040644 provides a curable composition comprising one or more reactive components that cure upon exposure to suitable conditions, the curable composition comprising (i) at least one aromatic nitroso precursor compound or combinations thereof; and (ii) a film former component comprising at least one non-halogenated hydroxy group-containing resin together with at least one crosslinking agent. The aromatic nitroso compound or aromatic nitroso precursor compound preferably comprises at least one alkoxy silane moiety. The aromatic nitroso precursor may be a nitrosobenzene precursor or comprise an aromatic oxime or aromatic dioxime. Isocyanates may be used as the crosslinking agent. In addition, this document discloses a curable composition comprising a) at least one film former component comprising at least one non-halogenated hydroxy group-containing resin together with at least one crosslinking agent; b) at least one epoxysilane having at least one terminal alkoxy silane group: c) at least one bis-silane. Pyrogenic silica may also be present in the compositions.

WO 2014/040645 discloses a curable composition comprising: a) one or more reactive components that cure upon exposure to suitable conditions, and b) a sulfur impregnated particulate solid which acts as a release agent for sulfur during the cure process; and c) optionally a solvent. The composition may additionally comprise a non-halogenated hydroxy group-containing resin together with a crosslinking agent, and an aromatic nitroso compound or an aromatic nitroso precursor, Pyrogenic silica may also be present in the compositions.

US 4,892,756 discloses a flock adhesive composition comprising: a) an aromatic nitroso compound; b) an epoxy resin having an epoxy equivalent of at least one; and c) a blocked isocyanate-functional urethane prepolymer being blocked with a blocking agent comprising a substituted or unsubstituted phenol. The composition may also contain fumed silica.

US 2008/0319105 discloses a one-component structural adhesive comprising: a) an epoxy resin: b) at least one toughening rubber; c) a polytetrahydrofurane-based toughener; and d) an epoxy curing agent. The polytetrahydrofurane toughener includes an elastomeric material having capped or blocked reactive groups. The polytetrahydrofurane-based toughener may be formed by reacting a polytetrahydrofurane polyol and an aliphatic polyisocyanate to form a prepolymer having free isocyanate groups, and then blocking the isocyanate groups. A filler my also be present in the composition.

WO 2011/029752 discloses an adhesive composition comprising: (i) a compound comprising: a) at least one alkoxy silane moiety; and b) at least one moiety selected from an aromatic nitroso or an aromatic nitroso precursor; and (ii) a carrier for the compound, the carrier comprising at least 0.1 % water. The compound may take the form of a reaction product of an isocyanate or isothiocyanate with an active hydrogen compound. The compound can react *in-situ* to form one of a nitrosobenzene moiety, a dinitrosobenzene moiety, or a para-nitrosophenol moiety.

WO 2015/024727 discloses a particulate material comprising: (I) a solid carrier material, and (ii) a nitroso compound and/or an aromatic oxime as a nitroso precursor compound, wherein said nitroso compound and/or said nitroso precursor compound is covalently bonded to the solid carrier material. The solid carrier material may be a silicaceous material, e.g. particulate silica.

US 2009/0062411 discloses a single-component high-temperature curing reactive composition comprising: a) at least one liquid polyene with a number-average molecular weight between 400 and 80,000; b) at least one block copolymer with at least one polyene block and at least one saturated block; and c) a vulcanizing system comprising sulfur and at least one vulcanizing accelerator.

US 2003/0176567 discloses a flock adhesive comprising: a) an organic solvent; b) one or more of an isocyanate-terminated polyol prepolymer; c) optionally, an epoxy resin; and d) optionally, a catalyst. The flock adhesive composition preferably contains an aromatic nitroso compound, an epoxy novolak resin, and a catalyst.

Additionally one coat systems using nitroso compounds are known, but these systems either have a limited pre-bake resistance and red rust formation or they provide a limited shelf life and poor adhesion on Zink phosphate metal surfaces. One coat system often contain chlorinated polyethylene as film former. But at high temperatures chlorinated polyethylene is not stable and starts to release hydrochloric acid [HCI]. The HCI initiates the cross linking of the nitroso compound. A cross linked nitroso compound is not able any more to connect the rubber with the metal surface and con
equently such systems often show poor adhesion. In addition, HCI released leads to corrosion, which leads to the formation of red rust. This is not accepted by the industrial standard.

Furthermore, the known systems of the state of the art often show a reduced aging resistance, especially steam resistance. This might be due to the above described properties of the known rubber to metal adhesives.

Therefore, the problem to be solved is to provide an improved curable composition, which overcomes the above described drawbacks of the known systems. The curable composition should especially provide an excellent adhesion between a metal and rubber substrate, showing an excellent pre-bake performance and a superior aging resistance, especially steam resistance.

Surprisingly this problem is solved by a curable composition comprising
a) at least one hydroxyl-group containing resin,
b) at least one nitroso-containing compound or at least one nitroso precursor compound,
c) at least one hydrophopic silica and
d) at least one blocked isocyanate.

Such curable compositions show beside excellent adhesion properties, especially for a rubber to metal bond, also excellent pre-bake performance and a superior aging resistance, especially steam resistance. Significant performance improvement after steam has been observed for hydroxyl-group containing resins, especially phenoxy / epoxy systems, which are crosslinked by the blocked isocyanates. In such systems without blocked isocyanate, no sufficient improvement of steam resistance has been observed. Only the combination of all ingredients mentioned enables a product that can meet the industrial requirements.

As film former for use in the improved composition of the present invention, the composition comprises at least one hydroxy group-containing resin, preferably a non-halogenated hydroxy group-containing resin.

Preferably hydroxy group-containing resin contain in average at least two or more, preferably more than two hydroxyl groups per molecule. Suitably, the hydroxy group-containing resin has preferably a hydroxy content of from 1 to 35 wt% of the total weight of the hydroxy group-containing resin. More suitably, the hydroxy group-containing resin may have a hydroxy content of from 2 to 30 wt% of the total weight of the hydroxy group-containing resin, more preferably from 4 to 15 wt% of the total weight of the hydroxy group-containing resin.

As suitable hydroxyl-group-containing resins, polymers such as polyvinyl alcohol, polyvinyl butyral, polycellulose acetate butyrate, polyvinyl formal, polyamide, polyester, phenol resin, epoxy resin and phenoxy resin may be used, which exhibit superior stress relaxation properties at the time of curing and bring about an improvement in adhesion attributable to hydroxyl groups.

The phenoxy resin is a resin obtained by allowing a bifunctional phenol, like bisphenol A, to react with an epihalohydrin, like epichlorohydrin, to have a high molecular weight, or subjecting a bifunctional epoxy resin and a bifunctional phenol to polyaddition reaction. Stated specifically, it can be obtained by allowing 1 mole of a bifunctional phenol to react with 0.985 to 1.015 mole of an epihalohydrin in the presence of an alkali metal hydroxide, in a non-reactive solvent and at a temperature of from 40 to 120 deg. C. In view of mechanical properties and thermal properties of the resin, particularly preferred is a resin obtained using a bifunctional epoxy resin and a bifunctional phenol which are mixed in an equivalent weight ratio of epoxy group/phenolic hydroxyl group=1/0.9 to 1/1.1, and by subjecting them to polyaddition reaction in the presence of a catalyst such as an alkali metal compound, an organic phosphorus compound or a cyclic amine compound, in an organic solvent having a boiling point of 120 deg. C. or above of such as amides, ethers, ketones, lactones or alcohols, and at a reaction solid matter concentration of 50% by weight or less while heating the system to 50 to 200 deg. C.

The bifunctional epoxy resin may include bisphenol-A epoxy resin, bisphenol-F epoxy resin, bisphenol-AD epoxy resin, bisphenol-S epoxy resin, and alkylene oxide addition products, as well as alicyclic epoxy resins, aliphatic chain epoxy resins and halides or hydrogenation products of these.

The bifunctional phenol may be any phenols so long as they are compounds having two phenolic hydroxyl groups, as exemplified by monocyclic bifunctional phenols such as hydroquinone, 2-bromohydroquinone, resorcinol and catechol, bisphenols such as bisphenol A, bisphenol F, bisphenol AD and bisphenol S, dihydroxybiphenyls such as 4,4'-dihydroxybiphenyl, dihydroxyphenyl ethers such as bis(4-hydroxyphenyl) ether, and any of these compounds into the aromatic ring of the phenolic skeleton of which a straight-chain alkyl group, a branched alkyl group, an aryl group, a methylol group, an allyl group, a cyclic aliphatic group, and also polycyclic bifunctional phenols formed by introducing a straight-chain alkyl group, a branched alkyl group, an allyl group, an ally group with a substituent, a cyclic aliphatic group or an alkoxycarbonyl group into the carbon atom present at the center of the bisphenolic skeleton of any of these compounds.

Stated specifically, the bifunctional phenol may include 4,4'-(1-methylethylidene)bis[2-methylphenol], 4,4'-methylenebis[2-methylphenol], 4,4'-(1-methylethylidene)bis[2-(1-methylethyl)phenol], 4,4'-(1-methylethylidene)bis[2-(1,1-methylpropyl)phenol 4,4'-(1-methylethylidene)bis[2-(1,1-dimethylethyl)phenol], tetramethylbisphenol A, tetramethylbisphenol F, 4,4'-methylenebis[2,6-bis(1,1-dimethylethyl)phenol], 4,4'-(1-methylethylidene)bis[2,6-di(1,1-dimethylethyl)phenol], 4,4'-(1-methylethylidene)bis[2-(2-propenyl)phenol], 4,4'-methylenebis[2-(2-propenyl(phenol), 4,4'-(1-methylethylidene)bis[2-(1-phenylethyl)phenol], 3,3'-dimethyl[1,1'-biphenyl]-4,4'-diol, 3,3',5,5'-tetramethyl[1,1'-biphenyl]-4,4'-diol, 3,3',5,5'-tetra-t-butyl[1,1'-biphenyl]-4,4'-diol, 3,3'-bis(2-propenyl)-[1,1'-biphenyl]-4,4'-diol, 4,4'-(1-methylethylidene)bis[2-methyl-6-hydroxymethylphenol], tetramethylolbisphenol A, 3,3',5,5'-tetrakis(hydroxymethyl)-(1,1'-biphenyl)-4,4'-diol, 4,4'-(1-methylethylidene)bis[2-phenylphenol], 4,4'-(1-methylethylidene)bis[2-cyclohexylphenol], 4,4'-methylenebis(2-cyclohexyl-5-methylphenol], 4,4'-(1-methylpropylidene)bisphenol, 4,4'-(1-methylheptylidene)bisphenol, 4,4'-(1-methyloctylidene)bisphenol, 4,4'-(1,3-dimethylbutylidene)bisphenol, 4,4'-(2-ethylhexylidene)bisphenol, 4,4'-(2-methylpropylidene)bisphenol, 4,4'-propylidenebisphenol, 4,4'-(1-ethylpropylidene)bisphenol, 4,4'-(3-methylbutylidene)bisphenol, 4,4'-(1-phenylethylidene)bisphenol, 4,4'-(phenylmethylene)bisphenol, 4,4'-(diphenylmethylene)bisphenol, 4,4'-[1-(4-nitrophenyl)ethylidene]bisphenol, 4,4'-[1-(4-aminophenyl)ethylidene]bisphenol, 4,4'-(4-bromophenyl)methylenebisphenol, 4,4'-(4-chlorophenyl)methylenebisphenol, 4,4'-(4-fluorophenyl)methylenebisphenol, 4,4'-(2-methylpropylidene)bis[3-methyl-6-(1,1-dimethylethyl)phenol], 4,4'-(1-ethylpropylidene)bis[2-methylphenol], 4,4'-(1-phenylethylidene)bis[2-methylphenol], 4,4'-(phenylmethylene)bis-2,3,5-trimethylphenol, 4,4'-(phenylethylidene)bis[2-(1,1-dimethylethyl)phenol], 4,4'-(1-methylpropylidene)bis[2-cyclohexyl-5-methylphenol], 4,4'-(1-phenylethylidene)bis[2-phenylphenol], 4,4'-butylidenebis[3-methyl-6-(1,1-dimethylethyl)phenol], 4-hydroxy-alpha -(4-hydroxyphenyl-alpha -methylbenzene acetic acid methyl ester, 4-hydroxy-alpha -(4-hydroxyphenyl-alpha -methylbenzene acetic acid ethyl ester, 4-hydroxy-alpha -(4-hydroxyphenyl)benzene acetic acid butyl ester, and the like.

The polycyclic bifunctional phenols other than these may include 1,4-naphthalene diol, 1,5-naphthalene diol, 1,6-naphthalene diol, 1,7-naphthalene diol, 2,7-naphthalene diol, 4,4'-dihydroxydiphenyl ether, bis(4-hydroxyphenyl) methanone, 4,4'-cyclohexylidenebisphenol, 4,4'-cyclohexylidenebis[2-methylphenol], 4,4'-cyclopentylidenebisphenol, 4,4'-cyclopentylidenebis[2-methylphenol], 4,4'-cyclohexylidene[2,6-dimethylphenol], 4,4'-cyclohexylidenebis[2-(1,1-dimethylethyl)phenol], 4,4'-cyclohexylidenebis[2-cyclohexylphenol], 4,4'-(1,2-ethanediyl)bisphenol, 4,4'-cyclohexylidenebis[2-phenylphenol], 4,4'-[1,4-phenylenebis(1-methylethylidene)]bis[2-methyl]phenol, 4,4'-[1,3-phenylenebis(1-methylethylidene)]bisphenol, 4,4'-[1,4-phenylenebis(1-methylethylidene)]bisphenol, 4,4'-[1,4-phenylenebis(1-methylethylidene)]bis[2-methyl-6-hydroxymethylphenol], 4-{1-[4-(4-hydroxy-3-methylphenyl)-4-methylcyclohexyl]-1-methylethyl}-2-methylphenol, 4-{1-[4-(4-hydroxy-3,5-dimethylphenyl)-4-methylcyclohexyl]-1-methylethyl}-2,6-dimethylphenol, 4,4'-(1,2-ethanediyl)bis[2,6-di-(1,1-dimethylethyl)phenol].

Most preferably the hydroxyl-group containing resin is selected from epoxy resins and phenoxy resins, especially from epoxy resins and phenoxy resins based on a bisphenol.

These hydroxy group-containing polymers may preferably have a number average molecular weight of 1000 or more, preferably 2000 or more, but those having a molecular weight of 1000000 or more tend to have poor mixing properties. Preferably the number average molecular weight of the hydroxyl-group-containing resin is in the range of 1000 to 100000, preferably 2000 to 50000, more preferably 4000 to 25000 g/mol. The number average molecular weight Mn is measured via the standard procedure with GPC against a polystyrene standard.

As the hydroxyl-group containing resin, it is preferred to use a hydroxyl-group containing resin having a Tg (glass transition temperature) of 40 °C. or above (measured with DSC), preferably a Tg between 40 and 250°C, more preferably a Tg between 60 and 200 °C, most preferably between 80 and 170 °C.

The at least one hydroxy group-containing resin, especially the epoxy resins and phenoxy resins, may be preferably present in the composition of the invention in a range of from 1 to 20 wt%, preferably 2 to 15 wt%, more preferably 2,5 to 10 wt% of the total weight of the curable composition.

Especially preferred are epoxy resin, since these resins can be used with a higher amount of organic solvents with a low evaporation point.

In this context it is preferred that the improved curable composition of the present invention is substantially free of chlorinated polyesters, especially substantially free of chlorinated polyolefins and/or polyesters, preferably substantially free of halogenated polyolefins and/or polyesters, most preferred substantially free of halogenated polymers. The term "halogenated" includes especially fluorinated, brominated, chlorinated, and mixed-halogen substituted compounds comprising two or more different types of halogen atoms, such as bromine and chlorine. The term "substantially free" means that the improved curable composition of the present invention comprises less than 1 wt.-%, preferably less than 0.1 wt.-%, more preferably less than 0.01 wt.-%, and particularly preferably less than 0.001 wt.-% of these compounds, each based on the total amount of the inventive improved curable composition.

Additionally, to the preferred hydroxyl-group containing resin selected from phenoxy and/or epoxy resins the curable composition may additionally comprise a second hydroxyl-group containing polymer. Suitably, the second hydroxyl group-containing resin includes a (co)polymer, which is a polymer of at least one of polyvinyl alcohol, polyvinyl butyral and polycellulose acetate butyrate. Preferably, the curable composition contains a polycellulose acetate butyrate. Preferably this second hydroxy group-containing resin has a hydroxy content of from 1 to 4 wt% of the total weight of this hydroxy group-containing resin.

Desirably, such a hydroxyl group-containing resin has the general structure: 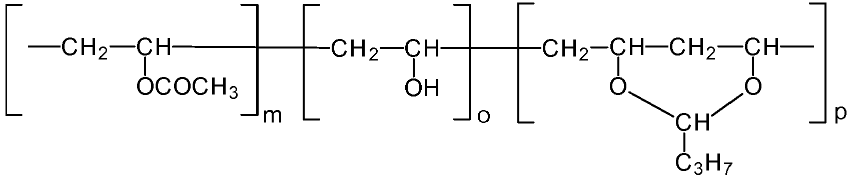 wherein each of n, o and p is at least 5, and the combined % wt of the m, o and p components in the non-halogenated hydroxyl group-containing resin is 100%.

Suitably, a preferred polycellulose acetate butyrate polymer has the general structure: 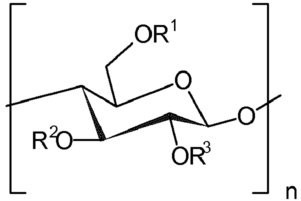 wherein R1, R2, R3 are independently selected from acetyl, butyryl or H, and n is an integer great than 10.

The second hydroxy group-containing resin, especially the polycellulose acetate butyrate, may be present in the composition of the invention in a range of from 0.1 to 5 wt%, preferably 0.3 to 2 wt% of the total weight of the curable composition.

Additionally to the hydroxyl-group containing resin the curable composition contains at least one nitroso-containing compound or at least one nitroso precursor compound, especially at least one nitroso-containing compound, especially preferred at least one nitroso-containing compound having a silane- and nitroso-moiety (nitrososilane). The term "nitroso-containing compound", as used herein, refers to any compound which comprises at least one nitroso functional group *-N=O. Preferably the at least one nitroso-containing compound or at least one nitroso precursor compound is present in the composition in a range of from 1 to 30 wt%, especially 3 to 25 wt%, more preferably 5 to 20 wt% of the total weight of the curable composition.

Preferably the nitroso-containing compound or the nitroso precursor compound are an aromatic nitroso or at least one aromatic nitroso precursor compound, respectively. It is to be appreciated that the term aromatic nitroso moiety refers to an aromatic moiety having at least one nitroso group. Similarly, the term aromatic nitroso precursor moiety refers to any compound that is capable of being transformed into an aromatic nitroso moiety with at least one nitroso group. Preferred aromatic nitroso precursors are oximes. The term aromatic comprises both fused and non-fused aromatic rings.

For example, a non-limiting selection of fused and non-fused aromatic nitroso moieties embraced by the present invention are detailed below:

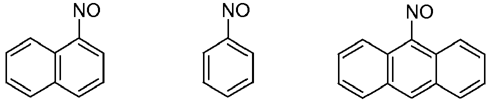

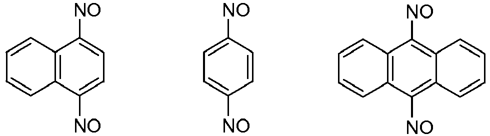

As will be appreciated by a person skilled in the art, the nitroso compounds or structures disclosed above may optionally be substituted one or more times, for example with at least one of C₁-C₂₀ alkyl, C₁-C₂₀ cycloalkyl, C₁-C₂₀ alkoxy, C₇-C₂₀ aralkyl, C₇-C₂₀ alkaryl, C₆-C₂₀ arylamine, C₆-C₂₀ arylnitroso, cyano, amino, hydroxy, halogen and combinations thereof. Such substitutions are possible provided there is no interference with effective bonding or curing of the compositions.

The at least one moiety selected from an aromatic nitroso or an aromatic nitroso precursor and combinations thereof may be selected from a nitrosobenzene or a nitrosobenzene precursor and combinations thereof.

Desirably, the nitrosobenzene compound may be a mononitrosobenzene compound, a dinitrosobenzene compound, or combinations thereof. Aromatic nitroso compound is selected from the group consisting of m-dinitrosobenzene, p-dinitrosobenzene, m-dinitrosonaphthalene, p-dinitrosonaphthalene, 2,5-dinitroso-p-cymeme, 2-methyl-1,4-dinitrosobenzene, 2-methyl-5-chloro-1,4-dinitrosobenzene, 2-fluoro-1,4-dinitrosobenzene, 2-methoxy-1-3-dinitrosobenzene, 5-chloro-1,3-dinitrosobenzene, 2-benzyl-1,4-dinitrosobenzene, 2-cyclohexyl-1,4-dinitrosobenzene and combinations thereof.

Desirably compositions of the present invention find utility in bonding a substrate to a natural or synthetic rubber. Especially, the compositions are used for applications where bonding metal to natural or synthetic rubber is required. The inventive composition provide for such bonding superior properties.

Suitably, the improved compositions of the present invention will provide for in-situ generation of a nitrosobenzene moiety or a dinitrosobenzene moiety. For example, to achieve good bonding it may be desirable for the compound to react in-situ to form a nitroso aromatic moiety comprising a hydroxy group. The nitroso aromatic moiety comprising a hydroxy group may be a para-nitrosophenol moiety. The phenolic moiety present may help to anchor the para-nitrosophenol moiety to a metal surface. para-Nitrosophenol may be generated *in-situ* from the oxidation of quinone mono-oxime as shown below for information purposes:

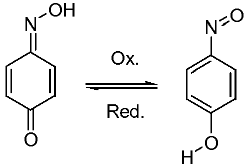

As will be appreciated by a person skilled in the art, references to nitrosobenzene and nitrosobenzene precursor moieties include nitrosobenzene and nitrosobenzene precursor moieties that may optionally be substituted one or more times with at least one of C₁-C₂₀ alkyl, C₃-C₂₀ cycloalkyl, C₁-C₂₀ alkoxy, C₇-C20 aralkyl, C₇-C₂₀ alkaryl, C₆-C₂₀ arylamine, C₆-C₂₀ arylnitroso, cyano, amino, hydroxy, halogen and combinations thereof. Such substitutions are possible provided there is no interference with effective bonding or curing of the compositions. For example, provided there is no interference with the generation of a nitrosobenzene moiety *in-situ.*

It will be appreciated that the nitrosobenzene precursor may form a nitrosobenzene structure *in-situ.* The nitrosobenzene precursor may be an aromatic oxime, for example at least one of a quinone dioxime or a quinone oxime or combinations thereof. Desirably, the aromatic nitroso compound precursor is selected from the group consisting of *p*-benzoquinone dioxime (QDO), naphthoquinone dioxime, toluquinone dioxime, diphenoquinone dioxime, diquinoyl dioxime, dibenzoyl dioxime and combinations thereof. The above list serves as a generalised example only and other aryl oximes and dioximes are possible and embraced by the present invention. Desirably, the nitrosobenzene precursor comprises *p-*benzoquinone oxime or *p*-benzoquinone dioxime (QDO). QDO is generally used as a vulcanizing agent for EPDM (ethylene-propylene diene monomer) to improve heat resistance.

It is also used as a rubber to metal adhesion promoter and as a curing agent. It has been found that such structures assist in the formation of desirable bonds.

A general scheme for the oxidation of quinone dioxime to the dinitrosobenzene species using an oxidant, such as benzoyl peroxide (BPO), is shown below, for information purposes:

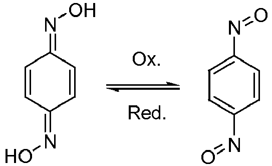

The at least one aromatic nitroso compound precursor may be present in an amount of 1 to 30 wt% of the total composition. Suitably, the at least one aromatic nitroso compound precursor may be present in an amount of 3 to 25 wt%, for example 5 to 20 wt%. Preferably an oxidant, like a peroxide, such as benzoyl peroxide, is present in the composition if a nitroso precursor compound is used. The amount of the oxidant is preferably sufficient to oxidize the whole nitroso precursor compound, preferably equivalent.

For example, the aromatic nitroso precursor moiety may be the mono- or dioxime of a compound selected from:

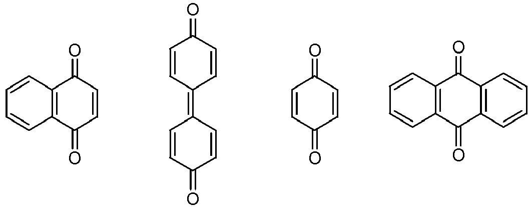

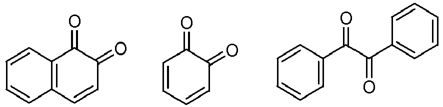

As will be appreciated by a person skilled in the art, the diketone structures disclosed above may optionally be substituted one or more times, for example with at least one of C₁-C₂₀ alkyl, C₃-C₂₀ cycloalkyl, C₁-C₂₀ alkoxy, C₇-C₂₀ aralkyl, C₇-C₂₀ alkaryl, C₆-C₂₀ arylamine, C₆-C₂₀ arylnitroso, cyano, amino, hydroxy, halogen and combinations thereof. Such substitutions are possible provided there is no interference with effective bonding or curing of the compositions, for example, with the generation of an aromatic nitroso compound *in-situ.*

As will be appreciated by a person skilled in the art, references to nitrosobenzene and nitrosobenzene precursor moieties include nitrosobenzene and nitrosobenzene precursor moieties that may optionally be substituted one or more times with at least one of C₁-C₂₀ alkyl, C₃-C₂₀ cycloalkyl, C₁-C₂₀ alkoxy, C₇-C₂₀ aralkyl, C₇-C₂₀ alkaryl, C₆-C₂₀ arylamine, C₆-C₂₀ arylnitroso, cyano, amino, hydroxy, halogen and combinations thereof. Such substitutions are possible provided there is no interference with effective bonding or curing of the compositions. For example, provided there is no interference with the generation of a nitrosobenzene moiety *in-situ.*

Especially preferred in the improved composition of the invention, the above mentioned nitrososilane compounds may have an alkoxy silane moiety of the general structure: 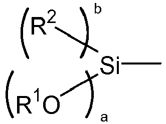 wherein a is from 1 to 3, b is from 0 to 2, with the proviso that a+b = 3; each R¹ is independently selected from the group consisting of H, C₁-C₂₄ alkyl, and C₃-C₂₄ acyl, preferably from C₁-C₄ alkyl and wherein when a ≥ 1 at least one R¹ is not hydrogen; and each R² is independently selected from the group consisting of C₁-C₂₄ alkyl and C₃-C₂₄ acyl, preferably from C₁-C₄ alkyl.

In one embodiment, a is 3 and R¹ is C₁-C₂₄ alkyl. R¹ may be C₁-C₄ alkyl and a may be 3.

The compounds may be reaction products derived from an isocyanate or isothiocyanate and an active hydrogen compound, such as -NHₓ (where x = 1 or 2), -SH, or -OH. In this manner the so-described compounds should contain at least one linkage described by: 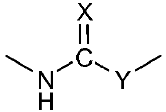 where X can be S or O, and Y includes -NHₓ (where x = 1 or 2), -S, or -O.

The general structure for the compounds is shown below: 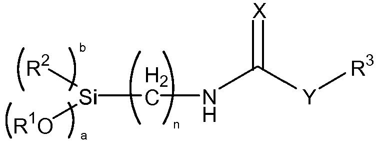 wherein n is from 1 to 20; a is from 1 to 3, b is from 0 to 2, with the proviso that a+b = 3; each R¹ is independently selected from the group consisting of H, C₁-C₂₄ alkyl, and C₃-C₂₄ acyl, preferably from C₁-C₄ alkyl and wherein when a ≥ 1 at least one R¹ is not hydrogen; each R² is independently selected from the group consisting of C₁-C₂₄ alkyl and C₃-C₂₄ acyl, preferably from C₁-C₄ alkyl; X is O or S; Y is O, S, or N(R³); and R³ is a moiety comprising a nitroso group or nitroso precursor group, preferably nitrosobenzene, quinone oxime or quinone dioxime. R³ is preferably a moiety comprising nitrosobenzene.

Structures for R³, showing the linkage through 'Y', can include: 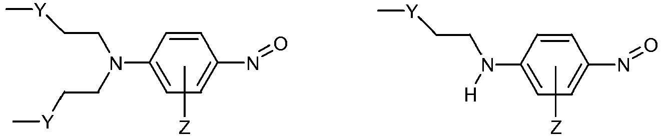 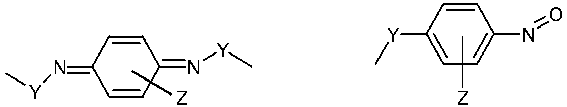 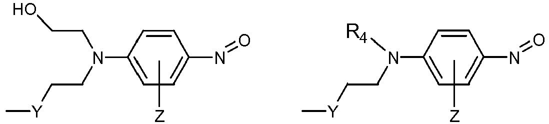 where R₄ can be C₁ to C₁₀ residue, preferably alkyl; and
Z indicates that the rings of the above structures can optionally be mono-, di-, tri- or tetrasubstituted with the group consisting of C₁-C₂₀ alkyl, C₃-C₂₀ cycloalkyl, C₁-C₂₀ alkoxy, C₇-C₂₀ aralkyl, C₇-C₂₀ alkaryl, C₅-C₂₀ arylamine, C₅-C₂₀ arylnitroso, amino, hydroxy, halogen and combinations thereof, and further where the substituents can either be the same or different on each carbon atom of the ring. Z is especially selected in a way so that the above mentioned aromatic nitroso moieties can be achieved. Such substitutions may be possible provided there is no interference with effective bonding or curing of the compositions. For example, provided there is no interference with the generation of a nitrosobenzene compound *in-situ.*

One exemplary, the compound utilised one composition of the present invention may have the general structure: 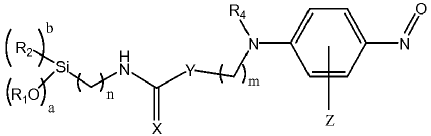
where 'a' can be 1-3 and 'b' can be 0-2; wherein a+b= 3 and at least one alkoxy group is present;
R¹ can be selected from H, C₁-C₂₄ alkyl, C₃-C₂₄ acyl, preferably from C₁-C₄ alkyl and where when a ≥ 1 at least one R¹ is not hydrogen; and
R² can be selected from C₁-C₂₄ alkyl and C₃-C₂₄ acyl, preferably from C₁-C₄ alkyl;
m and n can be the same or different and can be 1-10;
X can be O or S;
Y can be -O, -S, or -NH;
R₄ can be C₁ to C₁₀ residue, preferably alkyl; and
Z indicates that the rings of the above structures can optionally be mono-, di-, tri- or tetrasubstituted with the group consisting of C₁-C₂₀ alkyl, C₃-C₂₀ cycloalkyl, C₁-C₂₀ alkoxy, C₇-C₂₀ aralkyl, C₇-C₂₀ alkaryl, C₅-C₂₀ arylamine, C₅-C₂₀ arylnitroso, amino, hydroxy, halogen and combinations thereof, and further wherein the substituents can either be the same or different on each carbon atom of the ring. Z is especially selected in a way so that the above mentioned aromatic nitroso moieties can be achieved. Such substitutions may be possible provided there is no interference with effective bonding or curing of a bonding composition comprising the compound.

R¹ may be selected from C₁-C₂₄ alkyl or C₃-C₂₄ acyl. R¹ may be selected from C₁-C₂₄ alkyl, C₃-C₂₄ acyl and 'a' may be 3. X may be O. Y may be O or NH. Y may be O. X and Y may be O. n may be C₂-C₅ alkyl. m may be C₂-C₅ alkyl. R¹ may be selected from C₁-C₄ alkyl, X may be O and 'a' is 3. R¹ may be selected from C₁-C₄ alkyl, X may be O, Y may be O and 'a' may be 3. R¹ may be selected from C₁-C₄ alkyl, X may be O, Y may be NH and 'a' may be 3. R¹ may be selected from C₁-C₄ alkyl, X may be O, Y may be O, 'a' may be 3 and R₄ may be C₁ to C₁₀.

Desirably, the compounds in the above-mentioned composition of the present invention may have the general structure: 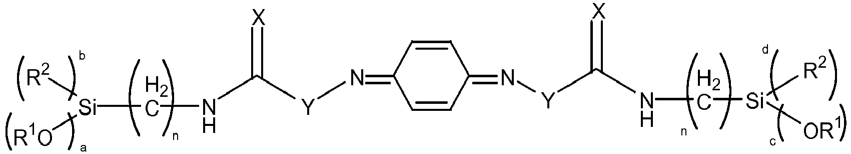
where n can be 1-10;
'a' can be 1-3 and 'b' can be 0-2; wherein a+b= 3 and at least one alkoxy group is present;
c can be 'a' or 1 to 3; d can be 'b' or 1 to 3;
R¹ can be selected from H, C₁-C₂₄ alkyl, C₃-C₂₄ acyl, preferably from C₁-C₄ alkyl and where when a ≥ 1 at least one R¹ is not hydrogen;
R² can be selected from C₁-C₂₄ alkyl and C₃-C₂₄ acyl, preferably from C₁-C₄ alkyl;
X can be O or S; and
Y can be -O, -S, or -NHₓ (where x = 1 or 2).

R¹ may be selected from C₁-C₂₄ alkyl, C₃-C₂₄ acyl. R¹ may be selected from C₁-C₂₄ alkyl, C₃-C₂₄ acyl and 'a' may be 3. X may be O. Y may be O or -NHₓ (where x = 1). Y may be O. X and Y may be O. R¹ may be selected from C₁-C₄ alkyl, X may be O and 'a' is 3. R¹ may be selected from C₁-C₄ alkyl, X may be O, Y may be O and 'a' may be 3. R¹ may be selected from C₁-C₄ alkyl, X may be O, Y may be -NHₓ (where x = 1) and 'a' may be 3. R¹ may be selected from C₁-C₄ alkyl, X may be O, Y may be O, n may be 3 and 'a' may be 3.

In a further embodiment, the above described compound of the above improved composition of the present invention may be an oligomeric or co-oligomeric compound of the general structure: 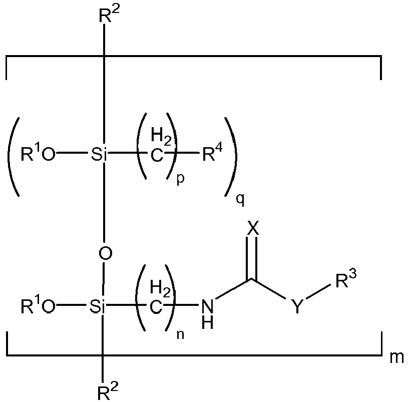
where m can be 1-100; n can be 1-10; p can be 1-10; q can be 0-50; and if q = 0, m ≥2;
R¹ can be selected from H, C₁-C₂₄ alkyl, C₃-C₂₄ acyl, and preferably from C₁-C₄ alkyl;
R² can be selected from OR¹, C₁-C₂₄ alkyl and C₃-C₂₄ acyl, and where when R² = OR¹ at least one R¹ is not hydrogen;
R⁴ can be selected from acrylate, aldehyde, amino, anhydride, azide, maleimide, carboxylate, sulphonate, epoxide, ester functional, halogens, hydroxyl, isocyanate or blocked isocyanate, sulfur functional, vinyl and olefin functional, or polymeric structures;
X can be O or S;
Y can be -O, -S, or -NHₓ (where x = 1 or 2); and
R³ may be a moiety comprising nitrosoaromatic, or a nitrosoaromatic precursor as defined herein.

R³ may be a moiety comprising nitrosobenzene, quinone dioxime or quinone oxime.
R¹ may be selected from C₁-C₂₄ alkyl, C₃-C₂₄ acyl. R¹ may be selected from C₁-C₂₄ alkyl, C₃-C₂₄ acyl and R² may be OR¹. X may be O. Y may be O or -NHₓ (where x = 1). Y may be O. X and Y may be O. R¹ may be selected from C₁-C₄ alkyl, X may be O and R² may be OR¹. R¹ may be selected from C₁-C₄ alkyl, X may be O, Y may be O and R² may be OR¹. R¹ may be selected from C₁-C₄ alkyl, X may be O, Y may be -NHₓ (where x = 1) and R² may be OR¹. R¹ may be selected from C₁-C₄ alkyl, X may be O, Y may be O, n may be 3, R² may be OR¹ and R³ may be a moiety comprising nitrosobenzene. R¹ may be selected from C₁-C₄ alkyl, X may be O, Y may be O, n may be 3, R² may be OR¹, R³ may be a moiety comprising nitrosobenzene, q may be 0, and m may be ≥2. R¹ may be selected from C₁-C₄ alkyl, X may be O, Y may be O, n may be 3, R² may be OR¹, R³ may be a moiety comprising nitrosobenzene, q may be 0, m may be ≥2, and R₄ may be vinyl or ester.

Specific examples of the above mentioned nitrososilane compounds used in the improved compositions of one embodiment of the present invention may include the following:

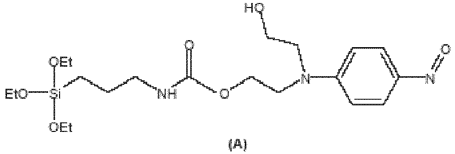

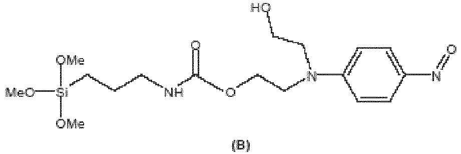

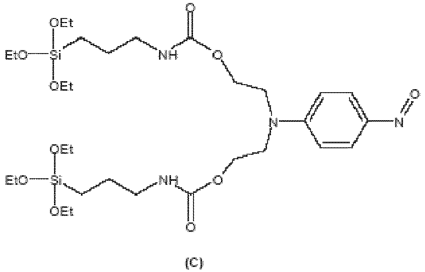

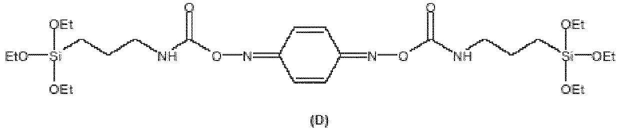

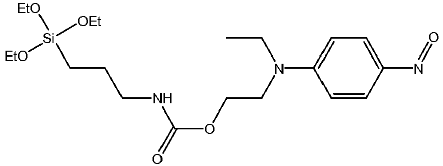

Desirably, the improved compositions of the present invention may comprise the following compound:

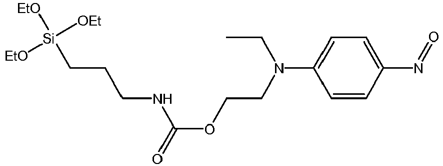

In the improved composition of the invention described above, the nitroso compound comprising the at least one alkoxy silane moiety and the at least one moiety selected from an aromatic nitroso or an aromatic nitroso precursor, especially an aromatic nitroso (also referred to as a nitrososilane) may be present in an amount of 1 to 30 wt% of the total composition. Suitably, the at least one aromatic nitroso compound, especially the nitrososilane, may be present in an amount of 3 to 25 wt%, for example, from 5 to 20 wt% based on the total composition.

In a further aspect, the invention provides for an improved bonding composition comprising at least one aromatic nitroso compound precursor and at least one oxidant for the aromatic nitroso compound precursor, wherein at least one of the precursor and the oxidant are encapsulated. The oxidant may be encapsulated. Alternatively, both the precursor and the oxidant may be encapsulated.

An encapsulated aromatic nitroso compound or encapsulated aromatic nitroso compound precursor may be present in an amount of 1 to 30 wt% of the total composition. Suitably, the encapsulated aromatic nitroso compound or encapsulated aromatic nitroso compound precursor may be present in an amount of 3 to 25 wt%, for example 5 to 20 wt%.

It will also be appreciated that where the improved compositions of the invention also comprise compounds having both alkoxy silane moiety and aromatic nitroso or an aromatic nitroso precursor moieties in the same molecule, as such compositions will assist in the formation of excellent polymer to substrate bonds, and in particular, the formation of rubber to metal bonds. Advantageously, inclusion of such dual moiety compounds (mentioned as nitrososilanes) in the improved composition of the invention, preferably together with sulfur impregnated particulate solid or carbon black (see below), assist in development of particularly durable and resistance bonds during the curing process. One advantage arising from use of nitrososilanes in curing compositions is that the compositions may be less toxic compared to conventional dinitrosobenzenes formulations (preferably no free or unethered nitrosobenzene compounds are formulated within the composition). Furthermore, inclusion of these nitrososilane compounds may also facilitate formulation of one part improved curable composition systems via conventional application techniques, such as spraying and dipping. One part systems can be readily applied to substrates in a single step using these convenient and conventional techniques. Compositions of the present invention may also be two-part compositions, but preferably the present composition are used as one part system.

Additionally the curable composition contains at least one hydrophobic silica, preferably a hydrophobic fumed silica. Hydrophobic silica is a form of silicon dioxide, commonly known as silica, that has hydrophobic groups chemically bonded to the surface. The hydrophobic groups are normally alkyl or polydimethylsiloxane chains. Hydrophobic silica can be processed in different ways; such as fumed silica, precipitated silica, and aerosol assisted self assembly, all existing in the form of nanoparticles. Suitable hydrophobizing agents for preparation of the hydrophobic silica (B2) are described in WO 2006/072407 (page 8, line 22 to page 12, line 20). Suitable methods for preparation of the hydrophobic silica (B2) are described in WO 2006/072407 (page 12, line 22 to page 15, line 20).

The hydrophobic silica is preferably a silica of a hydrophilicity which has been reduced by an additional treatment with a hydrophobizing agent after production in the hydrogen/oxygen gas flame. Since the hydrophobizing agent for preparation of the hydrophobic silica contains carbon, the hydrophobic silica has a carbon content of preferably more than 0.3% by weight, more preferably 0.5 to 15% by weight, most preferably 0.5 to 10% by weight.

The specific BET surface areas (measured to DIN 66131 and DIN 66132) of the hydrophobic silicas are preferably between 10 and 500 m2/g, more preferably between 30 and 400 m2/g, most preferably between 50 and 300 m2/g.

The silicas may occur in the form of hard sinter aggregates, which in turn form agglomerates. The mean particle sizes of the agglomerates of the silicas are preferably between 1 and 40 µm, more preferably between 5 and 25 µm, measured by laser diffraction on dispersions in a suitable solvent, for example, isopropanol. The mean particle sizes of the sinter aggregates of the silicas are preferably between 1 and 1000 nm, more preferably between 100 and 500 nm, and most preferably between 100 and 300 nm, measured by photon correlation spectroscopy.

The hydrophobic silicas, especially the hydrophobic fumed silicas, may be present in the composition of the invention in a range of from 2 to 25 wt%, preferably 3 to 20 wt%, most preferably 5 to 15 wt% of the total weight of the curable composition.

Blocked isocyanates are isocyanates in which the isocyanate groups have reacted with a protecting or blocking agent to form a derivative which will dissociate on heating to remove the protecting or blocking agent and release the reactive isocyanate group.

Especially due to the use of blocked isocyanate, the adhesive film in a vulcanization bonding stays at the desired location and is not pushed away during the vulcanization process. This leads to improved adhesion results. Additonally, the blocked isocyanate might cross link the OH-groups of the epoxy film during curing, the molecular weight of the matrix is increased and the film cannot be pushed away. The blocked isocyanate preferably does not contain a nitroso moiety.

Examples of blocking agents or thermally active blocking groups for polyisocyanates include aliphatic, cyclo-aliphatic or aralkyl monohydric alcohols, hydroxylamines and ketoximes. Other examples of applicable blocking agent functionalities include oximes, pyrazoles, phenols and caprolactams.

The thermally active blocking group is any group which provides a blocked polyisocyanate which remains stable at ambient temperatures, such as 20 to 25 deg. C., for instance about 23 deg. C., but which unblocks on heating, for example on heating to a temperature above 80 deg. C. preferably up to about 130 deg. C., for instance up to 120, 115 or 110 deg. C. under practical conditions. The unblocking temperature may also be determined under experimental conditions in the absence of active hydrogen compounds by IR spectroscopic techniques, and under such conditions is suitably above 60 deg. C., for instance above 70 or 80 deg. C. and may be up to 110 deg. C., more preferably up to 105 or 100 deg. C. Thus, a thermally active blocking group will release isocyanates on heating even if there is no curative agent present.

For example, the blocking agents may be chosen from 1,3 dicarbonyl compounds, especially from malonates such as diethyl malonate (DEM), dimethyl malonate, diisopropyl malonate, di(n-propyl) malonate, di(n-butyl) malonate, ethyl(n-butyl) malonate, methyl(n-butyl) malonate, ethyl(t-butyl) malonate, methyl(t-butyl) malonate, diethyl methylmalonate, dibenzyl malonate, diphenyl malonate, benzylmethyl malonate, ethylphenyl malonate, (t-butyl)phenyl malonate and isopropylidene malonate (Meldrum's acid); acetyl acetone; and acetoacetic esters such as methyl acetoacetate, ethyl acetoacetate, isopropyl acetoacetate, n-propyl acetoacetate, t-butyl acetoacetate, n-butyl acetoacetate, benzyl acetoacetate and phenyl acetoacetate. Preferred such blocking groups are derived from diethyl malonate, dimethyl malonate, Meldrum's acid and ethyl acetoacetate, most preferably diethyl malonate.

Other preferred thermally active blocking agents are chosen from pyrazoles such as 3,5-dimethylpyrazole, 3,5-diethylpyrazole, 3-methylpyrazole, pyrazole and 3-iso-butyl-5-tert-butyl-pyrazole, 3-iso-butyl-5-methyl-pyrazole and 3,5-di-tert-butyl-pyrazole; imidazoles; triazoles such as 1,2,4 triazole and 3,5-dimethyltriazole; methylethyl ketoxime and the pyrazoline and pyrazolinone blocking agents.

Particularly preferred branched alkyl pyrazoles are 3-methyl-5-iso-propyl pyrazole, 3-iso-butyl-5-methyl pyrazole, 3-sec-butyl-5-methyl pyrazole, 3-tert-butyl-5-methyl pyrazole, 3-ethyl-5-iso-propyl pyrazole, 3-iso-butyl-5-ethyl pyrazole, 3-sec-butyl-5-ethyl pyrazole, 3-tert-butyl-5-ethyl pyrazole, 3-iso-propyl-5-n-propyl pyrazole, 3-iso-butyl-5-n-propyl pyrazole, 3-sec-butyl-5-n-propyl pyrazole, 3-tert-butyl-5-n-propyl pyrazole, 3-n-butyl-5-iso-propyl pyrazole, 3-iso-butyl-5-n-butyl pyrazole, 3-n-butyl-5-sec-butyl pyrazole, 3-n-butyl-5-tert-butyl pyrazole, 3,5-di-iso-propyl pyrazole, 3-iso-butyl-5-iso-propyl pyrazole, 3-sec-butyl-5-iso-propyl pyrazole, 3-tert-butyl-5-iso-propyl pyrazole, 3,5-di-iso-butyl pyrazole, 3-iso-butyl-5-sec-butyl pyrazole, 3-iso-butyl-5-tert-butyl pyrazole, 3,5-di-sec-butyl pyrazole, 3-sec-butyl-5-tert-butyl pyrazole and 3,5-di-tert-butyl pyrazole.

In one preferred embodiment the thermally active agent is a thermally active agent other than a triazole compound and/or an oxime, especially other than ketoximes and aldoximes and, in particular, other than methyl ethyl ketoxime (MEKO).

The thermally active agent is preferably a 1,3 dicarbonyl compound, a pyrazole or imidazole, more preferably a malonate or a pyrazole compound, more preferably dimethylpyrazole, di-tert-butyl pyrazole, dimethyl malonate, diethyl malonate, Meldrum's acid or ethyl acetoacetate and most preferably dimethylpyrazole, diethyl malonate or dimethyl malonate.

The polyisocyanate compound used to prepare the blocked polyisocyanate may be, for example, but is not limited to ethylene diisocyanate, propylene diisocyanate, tetramethylene diisocyanate, hexamethylene diisocyanate (HDI), decamethylene diisocyanate, dodecamethylene diisocyanate, 2,4,4-trimethylhexamethylene-1,6 diisocyanate, phenylene diisocyanate, 2,4-diisocyanatotoluene, 2,6-diisocyanatotoluene, naphthylene diisocyanate, dianisidine diisocyanate, 4,4'-methylene-bis(phenyl isocyanate), 2,4'-methylene-bis(phenyl isocyanate), 4,4'-ethylene-bis(phenyl isocyanate), omega ,omega '-diisocyanato-1,3-dimethyl benzene, cyclohexane diisocyanate, omega ,omega '-diisocyanato-1,4-dimethyl cyclohexane, omega ,omega '-diisocyanato-1,4-dimethyl benzene, omega ,omega '-diisocyanato-1,3-dimethylcyclohexane, 1-methyl-2,4-diisocyanato cyclohexane, 4,4'-methylene-bis(cyclohexyl isocyanate), 3-isocyanato-methyl-3,5,5-trimethyl cyclohexyl isocyanate (isophorone diisocyanate, IPDI), dimer acid-diisocyanate, omega ,omega '-diisocyanatodiethyl benzene, omega ,omega '-diisocyanatodimethyl toluene, omega ,omega '-diisocyanato-diethyl toluene, fumaric acid-bis(2-isocyanato ethyl) ester to triphenyl-methane-triisocyanate, 1,4-bis-(2-isocyanato-prop-2yl) benzene, 1,3-bis-(2-isocyanate prop-2yl) benzene. In one embodiment of the invention, the polyisocyanate is preferably free from isocyanate groups directly attached to aromatic nuclei. In another embodiment, the polyisocyanate may contain isocyanate groups directly attached to aromatic nuclei. In a preferred embodiment, the polyisocyanate is an aliphatic isocyanate, preferably derived from HDI.

The polyisocyanate can also be a polyisocyanate obtained by reaction of an excess amount of the isocyanate with a) water, b) a lower molecular weight polyol, (e.g. m.w.<=300) or c) a medium molecular weight polyol, e.g. a polyol of greater than 300 and less than 8000 m.w. (Mn), e.g. sucrose, or by the reaction of the isocyanate with itself to give an isocyanurate.

The lower molecular weight polyol comprises, for example, ethyleneglycol, propyleneglycol, 1,3-butylene glycol, neopentyl glycol, 2,2,4-trimethyl-1,3-pentane diol, hexamethylene glycol, cyclohexane dimethanol, hydrogenated bisphenol-A, trimethylol propane, trimethylol ethane, 1,2,6-hexane triol, glycerine, sorbitol or pentaerythritol.

The polyisocyanate obtained by the above reaction may have a biuret structure, or an allophanate group. Especially preferred are general polyisocyanates with a biuret structure.

Also useful in the invention are the trimers of di- or higher polyisocyanates, i.e. materials containing an isocyanurate group.

Preferred polyisocyanates include HDI biuret, HDI trimer and IPDI trimer, especially a HDI biuret structure.

The blocked isocyanate is preferably present in the composition in a range of from 0,1 to 10 wt%, preferably 0,2 to 7 wt%, especially 0,3 to 5 wt%, most preferably 0,5 to 2 wt% of the total weight of the curable composition.

Additonally the curable composition preferably contains a sulfur impregnated particulate solid which acts as a release agent for sulfur during the cure process. It is to be appreciated that the solid is not itself solid sulfur or particulate sulfur materials. Rather, the particulate solid material acts as a carrier material for the sulfur, which is impregnated therein. By solid, it is meant that the material is solid at a temperature of 22°C, and preferably solid at 50°C, 60°C, 70°C, 80°C or 100°C. It should also be appreciated that impregnated sulfur means that the sulfur is releasably trapped within the particulate solid by means of, for example, dispersion, adsorption, trapping or immobilisation. It is preferred that the sulfur is impregnated within the particulate solid material by adsorption. Furthermore, impregnated means that the sulfur is dispersed throughout the particulate solid material, i.e., the majority of the sulfur is located within (inside) the particulate solid, but that minor amounts may be located at the surface of the particulate solid. It is also important to appreciate that sulfur release from the sulfur impregnated particulate solid is latent. The latency is thermal latency meaning that at room temperature (approx. 22°C) the sulfur impregnated particulate solid does not release sufficient quantities of sulfur, but on heating the sulfur is released from the particulate solid material. It is to be appreciated that for sulfur release, there is no requirement for rupture or breakage of the particulate solid material to effect such release, application of sufficient heat is required to release the trapped sulfur. It should be appreciated at temperatures of above 50°C a small amount of sulfur is released. Suitably, at temperatures of above 60°C, a greater quantity of sulfur is released. More suitably still, at temperatures of above 100°C, a greater quantity still of sulfur is released. It is to be appreciated that temperatures of above 120°C, provide an optimum quantity of sulfur is released. Selection of appropriate temperature allows the rate of release of sulfur to be controlled. The sulfur may be released by a diffusion process whereby the sulfur is released from its association with the particulate solid. Alternatively, sulfur may be released by a vaporisation process in which sulfur is typically sublimated at sufficiently elevated temperatures.

Desirably, the sulfur impregnated particulate solid used in the curable composition of the invention are latent sulfur releasing particulate solid. Typically, at room temperature (22°C) little or no sulfur is released, whereby the sulfur releasing ability desirably increases at elevated temperatures, typically through a sublimation process. The particulate solid may be a solid, such as a granular solid, such as a powder. The particulate solid may be an amorphous solid.

Suitably, the sulfur content of the particulate solid used is in the range of from 0.5 to 20 wt% of the sulfur impregnated particulate solid, more preferably, from 1.0 to 15 wt% of the sulfur impregnated particulate solid. Suitably the sulfur content of the sulfur impregnated particulate solid used in the various improved compositions of the invention is 1.5 to 12 wt%. A particularly preferred sulfur content giving increased durability and bond resistance is 12 wt% of the sulfur impregnated particulate solid.

Suitably, the sulfur impregnated particulate solid used is in the range of from 0.1 to 10 wt% of the total weight of the curable composition, more preferably from 0,5 to 7 wt%, especially from 1 to 5 wt% of the total weight of the curable composition. Suitably, the sulfur impregnated particulate solid used in the various improved compositions of the invention is 2 to 3 wt% of the total weight of the curable composition.

The sulfur impregnated particulate solid of the invention has preferably an average particle size of from 1 to 200 µm. Suitably, the average particle size is less than 10 µm. As used herein, the term "average particle size" refers to the D50 value of the cumulative volume distribution curve at which 50% by volume of the particles have a diameter less than said value. The average particle size or D50 value is measured in the present invention through laser diffractometry preferably using a Malvern Mastersizer 2000 available from Malvern Instruments Ltd. In this technique, the size of particles in suspensions or emulsions is measured using the diffraction of a laser beam, based on application of either Fraunhofer or Mie theory. In the present invention, Mie theory or a modified Mie theory for non-spherical particles is applied and the average particle sizes or D50 values relate to scattering measurements at an angle from 0.02 to 135 degrees relative to the incident laser beam.

Desirably, the sulfur impregnated particulate solid used in the improved composition of the invention have a BET surface area of from 500 m2/g to 1200 m2/g, more suitably from 600 m2/g to 1100 m2/g, more suitably still from 700 m2/g to 1000 m2/g, as determined by the ASTM method D6556-10. Particularly good bond durability and bond resistance may be achieved with sulfur impregnated particulate solid having BET surface area of 700 m2/g and 1000 m2/g as determined by the ASTM method D6556-10.

Example of sulfur impregnated particulate solids include sulfur-impregnated clays, sulfur-impregnated silicates, sulfur-impregnated aluminates, sulfur-impregnated charcoals or sulfur-impregnated carbon materials such as carbon black.

Desirably, the sulfur-impregnated particulate solid is a sulfur impregnated carbon black or a sulfur impregnated charcoal. Preferably, the sulfur-impregnated particulate solid is at least one sulfur impregnated charcoal.

The sulfur-impregnated particulate solid may be formed by burning a suitable raw material, for example, coal or biomaterials, such as coconut husks, thereby forming a carbonaceous particulate material that has a suitable sulfur loading.

It should also be appreciated that a single grade of sulfur impregnated particulate solid or mixtures of at least two grades sulfur impregnated particulate solid (as discussed above for particle sizes, sulfur contents, surfaces areas) can be used in the improved compositions of the invention.

The provision of heat to the improved compositions of the invention may aid in the controllable release of the sulfur from the particles or particular of the improved curable compositions of the invention. Suitably, the composition may be cured at a temperature greater than 100°C, and suitably, between 120-200°C. Suitably, the composition may be heated to a temperature between 150-190°C.

The composition may additionally comprise regular carbon blacks, which are preferably not sulfur impregnated. Preferably the carbon black is substantially free of sulfur. The term "substantially free" means that the carbon black comprises less than 1 wt.-%, preferably less than 0.1 wt.-%, more preferably less than 0.01 wt.-%, and particularly preferably less than 0.001 wt.-% of sulfur, each based on the total amount of carbon black.

The carbon black can be exemplified by furnace blacks (furnace carbon blacks) such as SAF, ISAF, HAF, MAF, FEF, SRF, GPF, APF, FF, CF, SCF, and ECF; acetylene blacks (acetylene carbon blacks); thermal blacks (thermal carbon blacks) such as FT and MT; channel blacks (channel carbon blacks) such as EPC, MPC, and CC; and graphite. A single one of these may be used or two or more may be used in combination.

The nitrogen adsorption specific surface area of the carbon black is perferrably 5 to 200 m2/g, while a lower limit of 50 m2/g and an upper limit of 150 m2/g are preferred. The dibutyl phthalate (DBP) absorption of the carbon black is prefeably 5 to 300 mL/100 g, while a lower limit of 80 mL/100 g and an upper limit of 180 mL/100 g are preferred. The nitrogen adsorption specific surface area is measured according to ASTM D4820-93, and the DBP absorption is measured according to ASTM D2414-93.

Suitably, the carbon black used is in the range of from 0.1 to 10 wt% of the total weight of the curable composition, more preferably from 0,5 to 7 wt%, especially from 2 to 6 wt% of the total weight of the curable composition. Suitably, the carbon black used in the various improved compositions of the invention is 3 to 5 wt% of the total weight of the curable composition.

The carbon black can be used in combination or instead of a sulfur release agent to provide excellent properties. Both carbon black and the sulfur release agent have a positive effect on the aging resistance. Therefore, the compositions contain preferably at least one sulfur release agent and/or at least one carbon black. However, it might be preferred to use a carbon black instead of a sulfur-release agent. Surprisingly, compositions with a carbon black and without any sulfur-release agent gives also superior properties, especially according to the storage stability.

Additionally the curable composition preferably contains at least one organic solvent. Examples of suitable organic solvents include aromatic and halogenated aromatic hydrocarbons such as benzene, ethylbenzene, toluene, xylene, chlorobenzene, and dichlorobenzene; non-halogenated and halogenated aliphatic hydrocarbons such as trichloroethylene, perchloroethylene, and propylene dichloride; ketones such as methyl ethyl ketone, and methyl isobutyl ketone; ethers, esters naphthas, etc., including mixtures of such solvents.

Preferred organic solvents are non-halogenated solvent. Especially preferred organic solvents are xylene and toluene, ethylbenzene, ethylacetate, methyl ethyl ketone and 1-methoxy-2-propylacetate.

The improved curable composition of the present invention can comprise any mixture of the aforementioned organic solvents, wherein mixtures of at least one aromatic solvent, like xylene, and at least one non-aromatic solvent, like ethylacetate, are preferred to ensure that a dry and non-tacky film is formed. The amount of organic solvent employed is preferably in the range of 50 to 90 percent by weight, more preferably in the range of 60 to 80 percent by weight, and particularly preferably in the range of 65 to 75 percent by weight, each based on the total amount of the inventive improved curable composition.

Preferably at least one organic solvent with a low evaporation point is used. These organic solvent can be used in combination with other solvents. Preferably at least least one organic solvent has a evaporation point below 150 °C, more preferably below 100 °C, preferably below 80 °C. Such a solvent is ethylacetate, with an evaporation point of 77 °C.

Preferably the at least one organic solvent with a low evaporation point is used in the range of 30 to 70 percent by weight, more preferably in the range of 40 to 60 percent by weight, each based on the total amount of the inventive improved curable composition. Preferably in combination with an aromatic solvent, like xylene or toluene.

The amount of ethylacetate is preferably in the range of 30 to 70 percent by weight, more preferably in the range of 40 to 60 percent by weight, each based on the total amount of the inventive improved curable composition.

Suitably, certain improved compositions of the present invention may comprise additional silanes. These silanes are in addition to the nitroso silanes mentioned above. The additional silanes do preferably not have a nitroso moiety.

Exemplary silanes may be of the general formula: 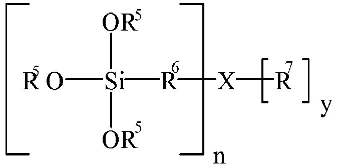 where:
n is either 1 or 2;
y = (2-n)
each R⁵ can be selected from C₁-C₂₄ alkyl or C₂-C₂₄ acyl;
each R⁶ can be selected from C₁-C₃₀ aliphatic groups, or substituted or unsubstituted C₆-C₃₀ aromatic groups;
R⁷ can be selected from hydrogen, C₁-C₁₀ alkylene, C₁-C₁₀ alkylene substituted with one or more amino groups, C₂-C₁₀ alkenylene substituted with one or more amino groups, C₆-C₁₀ arylene, or C₇-C₂₀ alkarlyene;
X- R⁷ is optional and X is either: 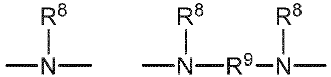
where each R⁸ can be selected from hydrogen, C₁-C₃₀ aliphatic groups, or C₆-C₃₀ aromatic groups; and R⁹ can be selected from C₁-C₃₀ aliphatic groups, or C₆-C₃₀ aromatic groups; and
where when n = 1, at least one of R³ and R⁵ is not hydrogen.

In one embodiment, X-R⁷ is present. R⁵ can be selected from C₁-C₂₄ alkyl, R⁶ can be selected from C₁-C₃₀ aliphatic groups, X can be N- R⁸ and R⁷ can be selected from hydrogen or C₁-C₁₀ alkylene. As will be appreciated, when X-R⁷ is absent the silane may be of the general formula (wherein R₅ and R₆ are as defined above):

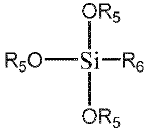

Preferred silanes include bis-silyl silanes such as those having two trisubstituted silyl groups. The substituents may be individually chosen from C₁-C₂₀ alkoxy, C₆-C₃₀ aryloxy and C₂-C₃₀ acyloxy. Suitable bis-silyl silanes for use in the improved compositions of the invention include: 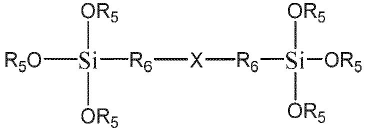 where:
each R⁵ can be selected from C₁-C₂₄ alkyl or C₂-C₂₄ acyl;
each R⁶ can be selected from C₁-C₂₀ aliphatic groups or C₆-C₃₀ aromatic groups;
X is optional and is either: 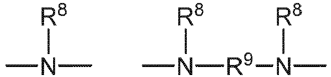
where each R⁸ can be selected from hydrogen, C₁-C₂₀ aliphatic groups, or C₆-C₃₀ aromatic groups; and R⁹ can be selected from C₁-C₂₀ aliphatic groups or C₆-C₃₀ aromatic groups.

In one embodiment, X is present. R₅ can be selected from C₁-C₂₄ alkyl, R⁶ can be selected from C₁-C₃₀ aliphatic groups, and X can be N- R⁸. As will be appreciated, when X is absent the *bis*-silane may be of the general formula (wherein R⁵ and R⁶ are as defined above):

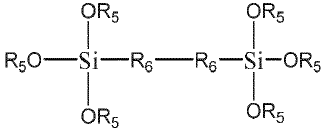

Examples of some bis-silyl aminosilanes used in the improved composition of the invention include: bis-(trimethoxysilylpropyl)amine, bis-(triethoxysilylpropyl)amine, bis-(triethoxysilylpropyl) ethylene diamine, N-[2-(vinylbenzylamino)ethyl]-3-aminopropyltrimethoxy silane, and aminoethyl-aminopropyltrimethoxy silane.

Such silanes may be included in the range from 1:3 to 3:1 relative to the nitrososilane compounds (stoichiometrically). As understood, such mixing of silanes and nitrososilanes can result in excellent bonding to substrates.

The total amount of additional silanes may be in the range of 1 to 10 wt% of the total composition. Suitably, the additional silanes may be present in an amount of 1 to 5 wt%, for example 1 to 3 wt%.

In particular, the inclusion of the amino bis(propyltrimethoxysilane) in addition to the nitrososilane significantly enhances the bond strength to the substrates. It is thought that the amino bis(propyltrimethoxysilane) has multiple functions within the formulation. This includes aiding the film forming and "wetting" of the substrate surfaces.

Generally, the final solution applied to the target substrate may vary in the total silane concentration and ratio (silane to nitrososilane) over a wide range and still provide beneficial results. The final solution should contain a total silane concentration of at least approximately 0.1% by volume, i.e., the concentration of the combination of silanes and nitrososilanes in the final solution. Solutions having a total silane concentration of between 0.1% and 10% by volume generally provide strong bonding without waste of valuable silanes.

The improved curable composition of the present invention further comprises preferably at least one epoxysilane having at least one terminal alkoxy silane group (hereinafter referred to as epoxysilane).

In one embodiment of the present invention the terminal alkoxy silane group of the epoxysilane is represented by formula

*-Si(R^{I})ᵤ(OR^{II})₍₃₋ᵤ₎

wherein u is 0, 1 or 2, each R^{I} is independently selected from hydrogen, halogen, alkyl, cycloalkyl, alkenyl, aryl or acyl and each R^{II} is independently selected from alkyl, cycloalkyl, alkenyl, aryl or acyl. In a particular preferred embodiment u is 0 and R^{II} is selected from alkyl, wherein preferred alkyl groups include methyl, ethyl, n-propyl and iso-propyl.

Suitable terminal alkoxy silane groups include trimethoxysilane, triethoxysilane, tri-n-propoxysilane and/or tri-isopropoxysilane groups.

To enhance the bonding properties of the improved curable composition of the present invention, it is advantageous that the epoxysilane, which is used in the improved curable composition of the present invention, is a non-polymeric compound, which means that the molecular weight of said epoxysilane is preferably less than 1000 g/mol, more preferably less than 750 g/mol, and particularly preferably less than 500 g/mol.

The epoxysilane contemplated for use in the practice of the present invention may be a monosilane. The term "monosilane", as used herein, refers to silane compounds having exactly one silicon atom per molecule, wherein monosilanes are preferred where three alkoxy residues are bound to the silicon atom.

Suitable epoxysilanes may be represented by following formula: 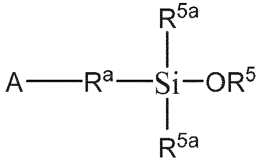 wherein R^{a} is a divalent linkage group, comprising 1 to 24, preferably 2 to 20 and more preferably 3 to 10 carbon atoms, R^{5a} independently of one another are selected from C₁₋₂₄ alkyl, such as C₁₋₅ alkyl, C₂₋₂₄ alkenyl, C₁₋₂₄ alkoxyl or C₃₋₂₄ acyl, and R₅ is selected from C₁₋₂₄ alkyl, such as C₁₋₅ alkyl or C₃₋₂₄ acyl, and A is either 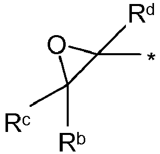 where R^{b}, R^{c} and R^{d} independently of one another are hydrogen or C₁₋₆ alkyl; or

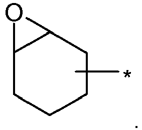

Desirably R^{b}, R^{c} and R^{d} are hydrogen.

The divalent linkage group R^{a} can be a straight or branched alkylene group of 1 to 24, preferably of 2 to 20 and more preferably of 3 to 10 carbon atoms. Said alkylene group may be interrupted by at least one heteroatom, preferably selected from oxygen, sulfur or nitrogen.

It is further on preferred that R¹ and R³ of formula (I) independently of one another are selected from C₁₋₅ alkoxyl, such as methoxy, ethoxy, n-propoxy or iso-propoxy, and/or R² of formula (I) is C₁₋₅ alkyl, such methyl, ethyl, n-propyl or iso-propyl. More preferably R¹ and R³ of formula (I) are both selected from methoxy, ethoxy, n-propoxy or iso-propoxy and R² of formula (I) is methyl, ethyl, n-propyl or iso-propyl.

Particularly preferred epoxysilanes are represented by formula (II), 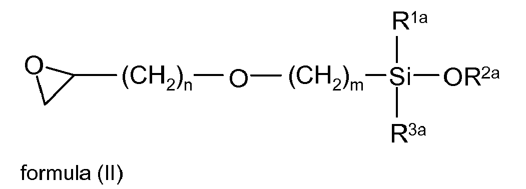 wherein n is an integer from 1 to 10, m is an integer from 0 to 14, R^{1a} and R^{3a} independently of one another are selected from C₁₋₂₄ alkyl, such as C₁₋₅ alkyl, C₂₋₂₄ alkenyl, C₁₋₂₄ alkoxyl or C₃₋₂₄ acyl, and R^{2a} is selected from C₁₋₂₄ alkyl, such as C₁₋₅ alkyl or C₃₋₂₄ acyl. Desirably, n is 1, 2 or 3 and/or m is 2, 3 or 4, wherein it is particularly preferred that n is 1 and m is 3.

It is further on preferred that R^{1a} and R^{3a} of formula (II) independently of one another are selected from C₁₋₅ alkoxyl, such as methoxy, ethoxy, n-propoxy or iso-propoxy, and/or R^{2a} of formula (II) is C₁₋₅ alkyl, such methyl, ethyl, n-propyl or iso-propyl. More preferably R^{1a} and R^{3a} of formula (II) are both selected from methoxy, ethoxy, n-propoxy or iso-propoxy and R^{2'} of formulae (II) is methyl, ethyl, n-propyl or iso-propyl.

Other particularly preferred epoxysilane contemplated for use in the practice of the present invention are represented by formula (IIa), 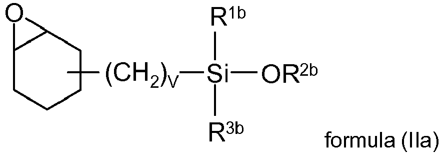 wherein v is an integer from 1 to 10, R^{1b} and R^{3b} independently of one another are selected from C₁₋₂₄ alkyl, such as C₁₋₅ alkyl, C₂₋₂₄ alkenyl, C₁₋₂₄ alkoxyl, such as C₁₋₅ alkoxyl or C₃₋₂₄ acyl, and R^{2b} is selected from C₁₋₂₄ alkyl, such as or C₃₋₂₄ acyl. Desirably, v is 1, 2 or 3.

It is further on preferred that R^{1b} and R^{3b} of formula (IIa) independently of one another are selected from C₁₋₅ alkoxyl, such as methoxy, ethoxy, n-propoxy or iso-propoxy, and/or R^{2b} of formula (IIa) is C₁₋₅ alkyl, such methyl, ethyl, n-propyl or iso-propyl. More preferably R^{1b} and R^{3b} of formula (IIa) are both selected from methoxy, ethoxy, n-propoxy or iso-propoxy and R^{2"} of formulae (IIa) is methyl, ethyl, n-propyl or iso-propyl.

In one embodiment of the present invention the epoxysilane is selected from 3-glycidyloxypropyltrimethoxysilane (GLYMO), 3-glycidyloxypropyltriethoxysilane (GLYEO), 3-glycidyloxypropyltri-n-propoxysilane, 3-glycidyloxypropyltri-iso-propoxysilane, 3-glycidyloxypropyltri-n-butoxysilane, 3-glycidyloxypropyltri-iso-butoxysilane, beta-(3,4-epoxycyclohexyl)-ethyltrimethoxysilane, beta-(3,4-epoxycyclohexyl)-ethyltriethoxysilane, beta-(3,4-epoxycyclohexyl)-ethyltri-n-propoxysilane, beta-(3,4-epoxycyclohexyl)-ethyltri-iso-propoxysilane, gamma-(3,4-epoxycyclohexyl)-propyltrimethoxysilane, gamma-(3,4-epoxycyclohexyl)-propyltriethoxysilane, gamma-(3,4-epoxycyclohexyl)-propyltri-n-propoxysilane, gamma-(3,4-epoxycyclohexyl)-propyltri-iso-propoxysilane and/or combinations thereof.

The aforementioned epoxysilanes are known in the art and are commercially available from various companies, including Evonik Industries AG, Wacker Chemie AG, Shin-Etsu Chemical and Gelest Inc.

A single epoxysilane or a mixture of two or more epoxysilanes can be used in the improved curable composition of the present invention.

To ensure sufficient adhesion to the substrate, especially to metal substrates, it is desirable that one or more epoxysilanes are present in an amount of 0.2 to 5 wt.-%, preferably in an amount of 0.5 to 2 wt.-%, and more preferably in an amount of 0.75 to 1.25 wt.-%, each based on the total amount of the improved curable composition composition of the present invention.

As mentioned above, the improved curable composition of the present invention further comprises preferably at least one bis-silane. The term "bis-silane", as used herein, refers to silane compounds having exactly two silicon atoms per molecule, wherein the two silicon atoms are linked with each other by a divalent linkage group and each silicon atom carries three additional substituents, wherein at least one of the three additional substituents is an alkyl or alkoxy residue. Consequently, the bis-silane used in the improved curable composition of the present invention comprises two terminal organo-silyl groups. Under the proviso that the bis-silane contemplated for use in the improved curable composition of the present invention comprises at least one terminal alkoxy silane group, as defined above, said bis-silane does not comprise at least one epoxy group.

In one embodiment of the present invention the terminal organo-silyl group of the bis-silane is represented by formula

*-Si(R^{III})_{w}(OR^{IV})_{(3-w)}

wherein w is 0, 1, 2 or 3, preferably w is 3, each R^{III} is independently selected from hydrogen, halogen, alkyl, cycloalkyl, alkenyl, aryl or acyl and each R^{IV} is independently selected from alkyl, cycloalkyl, alkenyl, aryl or acyl. In a particular preferred embodiment w is 0 and R^{IV} is selected from alkyl, wherein preferred alkyl groups include methyl, ethyl, n-propyl and iso-propyl.

To enhance the bonding properties of the improved curable composition of the present invention, it is advantageous that the bis-silane, which is used in the improved curable composition of the present invention, is a non-polymeric compound, which means that the molecular weight of said bis-silane is preferably less than 1000 g/mol, more preferably less than 750 g/mol, and particularly preferably less than 500 g/mol.

Suitable bis-silanes contemplated for use in the improved curable composition of the present invention may be represented by formula (III),

(R¹⁰)_{(3-q)}(R¹¹)_{q}Si-B-Si(R¹¹)ₚ(OR¹⁰)₍₃₋ₚ₎ formula (III)

wherein p is 0 to 3, q is 0 to 3, B represents a divalent linkage group comprising 1 to 24 carbon atoms and at least one heteroatom selected from N, S or O, each R¹⁰ is independently selected from hydrogen, halogen, C₁₋₂₄ alkyl, C₂₋₂₄ alkenyl, C₁₋₂₄ alkoxyl or C₃₋₂₄ acyl, and each R¹¹ is independently selected C₁₋₂₄ alkyl or C₃₋₂₄ acyl.

Particular good bonding and drying properties are achieved, when the divalent linkage group B of formula (III) comprises one of the following structural elements: 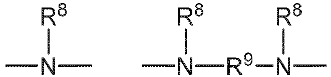 where each R⁸ is independently selected from hydrogen, C₁₋₂₄ alkyl, such as C₁₋₄ alkyl, or C₆₋₁₈ aryl and R⁹ is selected from C₁₋₂₄ alkylene or C₆₋₁₈ arylene; or 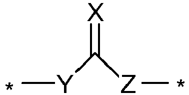 where Y is selected from O, S, and -NR¹²-, Z is selected from O, S, and -NR¹³-, wherein R¹² and R¹³ independently of one another are selected from hydrogen or C₁₋₂₄ alkyl, such as C₁₋₄ alkyl, or C₆₋₁₈ aryl; X is the selected from O or S, with the proviso that Y and Z are not both O or S. Preferably Y is NH, Z is NH and X is O.

In an alternative embodiment the divalent linkage group B of formula (III) comprises the following structural element: 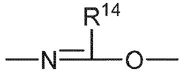 where R¹⁴ is selected from C₁₋₂₄ alkyl, such as C₁₋₄ alkyl.

Preferred bis-silanes include those having two trisubstituted silyl groups. The substituents may individually be chosen from C₁₋₂₄ alkoxy, C₆₋₁₈ aryloxy and C₂₋₂₄ acyloxy.

Suitable bis-silanes for use within the present invention include those of formula (IV),

(R¹⁵)₃Si-(R¹⁶)ₖ-D-(R¹⁶)ₖ-Si(OR¹⁵)₃ formula (IV)

where k is 0 or 1, each R¹⁵ is independently selected from C₁₋₄ alkyl or C₁₋₄ acyl and each R¹⁶ is independently selected from C₁₋₆ alkylene or C₆₋₁₂ arylene, and D is selected from one of the following divalent groups: 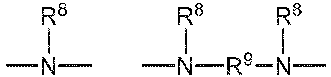 where each R⁸ is independently selected from hydrogen, C₁₋₂₄ alkyl, such as C₁₋₄ alkyl, or C₆₋₁₈ aryl and R⁹ is selected from C₁₋₂₄ alkylene or C₆₋₁₈ arylene; 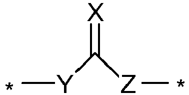 where Y is selected from O, S, and -NR¹⁵-, Z is selected from O, S, and -NR¹⁵-, wherein R¹⁵ independently of one another are selected from hydrogen or C₁₋₂₄ alkyl, or C₆₋₁₈ aryl, and X is the selected from O or S, with the proviso that Y and Z are not both O or S. Preferably Y is NH, Z is NH and X is O.

Examples of suitable bis-silanes for use within the improved curable composition of the present invention include: 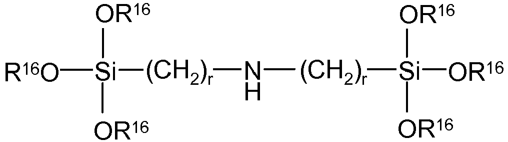 where r is from 1 to 10, such as from 1 to 4 and R¹⁶ is selected from C₁₋₄ alkyl or C₁₋₄ acyl, and/or 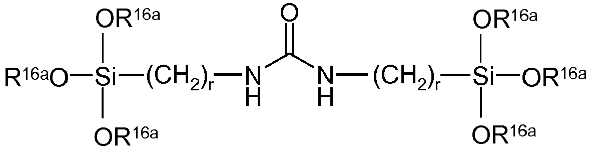 where r is from 1 to 10, such as from 1 to 4 and R^{16a} is selected from C₁₋₄ alkyl or C₁₋₄ acyl.

In one embodiment of the present invention the bis-silane is selected from bis-(trimethoxysilylethyl)amine, bis-(triethoxysilylethyl)amine, bis-(tri-n-propoxysilylethyl)amine, bis-(tri-iso-propoxysilylethyl)amine, bis-(trimethoxysilylpropyl)amine, bis-(triethoxysilylpropyl)amine, bis-(tri-n-propoxysilylpropyl)amine, bis-(tri-iso-propoxysilylpropyl)amine, bis-(trimethoxysilylethyl)urea, bis-(triethoxysilylethyl)urea, bis-(tri-n-propoxysilylethyl) urea, bis-(tri-iso-propoxysilylethyl)urea, bis-(trimethoxysilylpropyl)urea, bis-(triethoxysilylpropyl)urea, bis-(tri-n-propoxysilylpropyl)urea, bis-(tri-iso-propoxysilylpropyl) urea, and/or combinations thereof. Preferably, bis-(trimethoxysilylpropyl)urea and/or bis-(trimethoxysilylpropyl)amine are used in the present invention, although other bis-silanes may also be used.

Other desirable bis-silanes include N,O-bis(trimethylsilyl)acetamide N,O-bis(triethylsilyl)acetamide, 1,3-bis(trimethylsilyl)urea, 1,3-bis(triethylsilyl)urea, 1,3-bis(trimethylsilyl)thiourea, 1,3-bis(triethylsilyl)thiourea, and/or mixtures thereof.

The aforementioned bis-silanes are known in the art and are commercially available form various companies, including Evonik Industries AG, Wacker Chemie AG, Shin-Etsu Chemical and Gelest Inc.

A single bis-silane or a mixture of two or more bis-silanes can be used in the improved curable composition of the present invention.

It is desirable that one or more bis-silanes are present in an amount of 0.1 to 3 wt.-%, preferably in an amount of 0.2 to 2 wt.-%, and more preferably in an amount of 0.4 to 1 wt.-%, each based on the total amount of the of improved curable composition of the present invention.

The bonding performance of the improved curable composition of the present invention can further be improved by using the following combinations of epoxysilanes and bis-silanes:
- 3-glycidyloxypropyltrimethoxysilane and bis-(trimethoxysilylpropyl)amine;
- 3-glycidyloxypropyltrimethoxysilane and bis-(trimethoxysilylpropyl)urea;
- 3-glycidyloxypropyltriethoxysilane and bis-(trimethoxysilylpropyl)amine;
- 3-glycidyloxypropyltriethoxysilane and bis-(trimethoxysilylpropyl)urea;
- 3-glycidyloxypropyltri-n-propoxysilane and bis-(trimethoxysilylpropyl)amine;
- 3-glycidyloxypropyltri-n-propoxysilane and bis-(trimethoxysilylpropyl)urea;
- 3-glycidyloxypropyltri-iso-propoxysilane and bis-(trimethoxysilylpropyl)amine;
- 3-glycidyloxypropyltri-iso-propoxysilane and bis-(trimethoxysilylpropyl)urea.

Particularly good bonding performances are achieved when the following combinations of epoxysilanes and bis-silanes are used in the amounts given, wherein each amount is based on the total amount of the improved curable composition of the present invention:
- from 0.5 to 2 wt.-% of 3-glycidyloxypropyltrimethoxysilane and from 0.15 to 1 wt.-% of bis-(trimethoxysilylpropyl)amine;
- from 0.5 to 2 wt.-% of 3-glycidyloxypropyltrimethoxysilane and from 0.15 to 1 wt.-% of bis-(trimethoxysilylpropyl)urea;
- from 0.5 to 2 wt.-% of 3-glycidyloxypropyltriethoxysilane and from 0.15 to 1 wt.-% of bis-(trimethoxysilylpropyl)amine;
- from 0.5 to 2 wt.-% of 3-glycidyloxypropyltriethoxysilane and from 0.15 to 1 wt.-% of bis-(trimethoxysilylpropyl)urea;
- from 0.5 to 2 wt.-% of 3-glycidyloxypropyltri-n-propoxysilane and from 0.15 to 1 wt.-% of bis-(trimethoxysilylpropyl)amine;
- from 0.5 to 2 wt.-% of 3-glycidyloxypropyltri-n-propoxysilane and from 0.15 to 1 wt.-% of bis-(trimethoxysilylpropyl)urea;
- from 0.5 to 2 wt.-% of 3-glycidyloxypropyltri-iso-propoxysilane and from 0.15 to 1 wt.-% of bis-(trimethoxysilylpropyl)amine;
- from 0.5 to 2 wt.-% of 3-glycidyloxypropyltri-iso-propoxysilane and from 0.15 to 1 wt.-% of bis-(trimethoxysilylpropyl)urea.

The epoxysilane and the bis-silane used in the present invention are preferably free and mobile components of the improved curable composition of the present invention, which means that said silane compounds are not immobilized on a carrier material, such as a solid surface.

As a further component the curable composition according to the invention preferably contains at least one hardener, especially at least one thermally activatable hardener.

A thermally activatable hardener is understood according to the invention to mean compounds that can be stored together with the epoxy resins for at least one month at 22°C without the curing reaction starting to any significant extent. The molecular structure of the thermally activatable hardener preferably changes only above 80°C, in particular only above 100°C, so that these compounds act as a hardener above this temperature and initiate and/or accelerate the polymerization reaction of the epoxy resins.

The thermally activatable hardeners can be selected from e.g. the following compounds: guanidines, substituted guanidines, substituted ureas, melamine resins, guanamine derivatives, cyclic tertiary amines, aromatic amines and/or mixtures thereof. The hardeners can be incorporated into the curing reaction stoichiometrically, but they can also be catalytically active. Examples of substituted guanidines are methylguanidine, dimethylguanidine, trimethylguanidine, tetramethylguanidine, methylisobiguanidine, dimethylisobiguanidine, tetramethylisobiguanidine, hexamethylisobiguanidine, heptamethylisobiguanidine and most particularly cyanoguanidine (dicyandiamide). Alkylated benzoguanamine resins, benzoguanamine resins or methoxymethylethoxymethylbenzoguanamine may be mentioned as representatives of suitable guanamine derivatives. Furthermore, 3,3-diaminodiphenylsulfone and 4,4-diaminodiphenylsulfone and derivatives thereof as well as ionic liquids (imidazolium salts), such as for instance Baxxodur® ECX-2450, can be used as latent hardeners. Furthermore, the thermally activatable hardeners marketed with the trade names Ancamine® 2014, Ancamine® 2337, Adeka® EH-4357 and Adeka® EH-4360 are preferred according to the invention. Likewise preferred are the products marketed by Ajinomoto with the trade name Ajicure®, in particular the products Ajicure® AH-300, Ajicure® PN23, Ajicure® PN50, Ajicure® MY24 and Ajicure® MY25. Microencapsulated systems, as marketed by Asahi Denka with the trade name Novacure®, are also preferred according to the invention. Dicyandiamide is most particularly preferably suitable as a thermally activatable hardener.

The thermally activatable hardeners, in particular dicyandiamide, are contained according to the invention preferably in a quantity from 1 to 15 wt.%, in particular from 2 to 10 wt.%, based in each case on the total application preparation.

In addition to the aforesaid hardeners, catalytically active substituted ureas can be employed according to the invention as curing accelerators. These are, in particular, p-chlorophenyl-N,N-dimethyl urea (monuron), 3-phenyl-1,1-dimethylurea (fenuron) or 3,4-dichlorophenyl-N,N-dimethyl urea (diuron). In principle, it is also possible to employ catalytically active tertiary acrylic amines or alkylamines, such as e.g. benzyldimethylamine, tris(dimethylamino)phenol, piperidine or piperidine derivatives. Furthermore, various, preferably solid imidazole derivatives can be employed as catalytically active curing accelerators. The following may be mentioned as representatives: 2-ethyl-2-methylimidazole, N-butylimidazole, benzimidazole and N-C₁ to C₁₂ alkylimidazoles or N-arylimidazoles. Furthermore, adducts of amino compounds to epoxy resins are suitable as cure-accelerating additions to the aforesaid hardeners. Suitable amino compounds are tertiary aliphatic, aromatic or cyclic amines. Suitable epoxy compounds are e.g. polyepoxides based on glycidyl ethers of bisphenol A or F or of resorcinol. Specific examples of these adducts are adducts of tertiary amines, such as 2-dimethylaminoethanol, N-substituted piperazines, N-substituted homopiperazines, N-substituted aminophenols, on di- or polyglycidyl ethers of bisphenol A or F or of resorcinol.

The curing accelerators for epoxy resins are contained according to the invention preferably in a quantity from 0 to 3 wt.%, in particular from 0.1 to 1.5 wt.%, based in each case on the total application preparation.

It will be appreciated by a person skilled in the art that the various improved curable compositions of the present invention may additionally comprise conventional additives such as fillers, pigments, stabilisers, and moisture scavengers, provided that the additives do not interfere with effective curing of the compositions. These include inactive fillers such as calcium carbonates, chalks, talcs, or metal oxides; accelerator systems; vulcanization retarders; promoters such as zinc oxide or stearic acid; plasticizers such as aromatic, paraffinic, naphthenic and synthetic mineral oils; ageing, light-protecting ozone-protecting, fatigue, coloration, and processing auxiliaries; and sulfur. Commonly these additives may be present at a quantity of 0.1 parts to 20 parts per 100 parts by weight of the composition.

The improved compositions of the present invention possess a number of advantages. For example, an improved curable composition may be formulated and stored. Such formulations are easily and conveniently applied to substrates in a standard manner. Furthermore, the improved compositions as so provided also achieve, on curing, excellent bond strengths to polymeric materials, such as elastomers, for example rubbers (natural or synthetic). For example, in rubber to metal bonding tests to determine the bond strength of the compositions of the present invention, the present composition show excellent bond strength and adhesion. Furthermore, the resultant bonds have a good hot water/steam resistance.

As used herein, the terms "elastomer", "elastomeric substrate" or "elastomeric material" are used interchangeably in the present invention. The terms preferably refer to a material that can undergo a substantial elongation and then returns to its approximately original dimensions upon release of the stress elongating the material. More preferably the elastomeric substrate has a permanent set of less than 50%, such as less than 30% or less than 10% after one minute when recovering from a strain of 100% applied for one minute at a temperature of 22°C.

In one embodiment the elastomer or elastomeric substrate may be selected from natural or synthetic rubbers, wherein the improved curable compositions of the present invention are particularly suitable for bonding polar rubbers, like nitrile butadiene rubbers (NBR), hydrogenated nitrile butadiene rubbers (HNBR) and/or ethylene acrylic elastomers to rigid substrates, such as metallic substrates. The synthetic rubber may be a nitrile butadiene rubber (HNBR). The polymer may be a C2-C1,000,000 polymer, such as a C2-C10,000 polymer. Other suitable polymers, include those capable of reacting with nitroso groups so as to provide cross-links therebetween. Such a reaction produces a variety of cross-links, for example between the nitroso group and a rubber material. The materials of the invention are thought to reduce free nitroso groups as the nitroso group is within a molecular structure.

Suitably, the improved compositions of the invention may also be used in vulcanisation application as well as bonding of polymeric substrates, such as elastomeric substrates to any of a wide variety of useful materials, including for example other elastomers, non-elastomeric but flexible materials such as for example fabrics or films, and rigid materials such as plastics, engineering plastics, wood, metal, glass or other hydroxylated substrates. The improved compositions of the invention improve the adhesion provided by known compositions whereby durability of the bond between substrate is improved as a result of the presence of sulfur releasing particulate solid in the improved composition.

In examples utilising an elastomeric, such as a rubber substrate, the elastomer may be vulcanised or crosslinked prior to bonding to the second substrate. Alternatively, the elastomeric substrate may be vulcanised or crosslinked concurrently with bonding to the second substrate. The second substrate may be a metal. The nitroso aromatic compound of the composition of the present invention may become anchored to the elastomeric substrate.

On polymerisation, the nitroso groups of the compounds of the composition can react with polymers, in particular a polymer with diene or allylic functionality within the polymer chain. Reaction of a nitroso group and an allylic group on the polymer occurs via an alder-ene reaction. Such a reaction produces a variety of cross-links, for example between the nitroso group and an elastomeric material.

Suitably, the improved composition of the invention may be preferably used for bonding polar elastomeric materials, such as nitrile butadiene rubbers (NBR), hydrogenated nitrile butadiene rubbers (HNBR) and/or ethylene acrylic elastomers to metallic substrates.

In contrast to conventional systems, the improved compositions of the present invention can be applied to the unvulcanised rubber (as distinct from a metal or glass substrate), prior to vulcanisation and bond formation, and upon subsequent vulcanization a bond results. This means that the improved compositions may be applied to either the rubber or the metal or the hydroxylated surface. Conventional systems do not form a bond if applied in this manner.

Alternatively, the improved compositions may be applied to a metal or a hydroxylated surface. This means that application to either the polymeric substrate such as a rubber or a metal or glass substrate or unvulcanised rubbers are both possible. Thus a rubber substrate may be vulcanised or crosslinked prior to bonding to the metal or hydroxylated surface. The rubber substrate may be vulcanised or cross-linked concurrently with bonding to the metal surface.

The compositions of the present invention are coated in the range of 1 to 100 µm, preferably 10 to 60 µm, and more preferably in the range of 20 to 30 µm.

Generally, it is desirable that bonding is achieved during a vulcanisation step. Suitable vulcanisation methods include compression moulding, transfer moulding, injection moulding and autoclave heating, for example with steam or hot air. For example semi-solid rubber can be injected into a mould. The semi-solid rubber is then cross-linked into a fully cured rubber and the bond with the substrate is formed at the same time.

Certain requirements must be fulfilled by a curing system in order to allow it to be successfully employed in a production environment. For example, the curing system must be easy to process. This means that it should be stable for use. Issues with the prior compositions have included a tendency to sediment. Accordingly, it is desirable that the curing system has a low tendency to sediment.

Furthermore, the curing system should be easy to apply. For example, it should be convenient to apply by any suitable dispensing system. It is also desirable that it dries quickly so that components can be handled without applied material running off and/or fouling production equipment. It is also desirable that the curing system shows good wetting properties for ease of application and spreading, for instance. It is also desirable to have good curing strengths. This curing should be achieved independently of the type of elastomer (rubber) employed and also independently of the type of substrate. It will be appreciated that some rubbers are blended materials and accordingly it is desirable that good curing is achieved with such blended materials. Suitably consistent curing is achieved under various process parameters.

It is desirable that the bonds and in particular the substrate/substrate bond, such as rubber/metal joint, are durable under high pressure and even if exposed to an aggressive atmosphere, for example, water steam or a hot liquid such as oil. The bonds must also be durable against relatively high mechanical stress, under conditions involving any of high pressure, temperature and/or moisture. Advantageously, inclusion of the sulfur releasing particulate solid in these compositions increases bond durability and in particular under conditions of moisture and/or elevated temperatures or pressures.

The improved compositions of the invention can be easily applied at the interface between the polymer and the substrate and may assist in developing strong and durable bonds during the curing process.

The various improved compositions of the present invention may be utilised to bond a polymeric substrate as defined above to a second substrate, which may be an elastomer, a plastic, a metal or glass as defined above, especially metal.

Suitably, there is provided process for bonding a material to a substrate, comprising the steps of:
a) providing a curable composition as defined herein;
b) providing the material to be bonded in a non-cured form, and
c) simultaneously curing the composition and the material to be bonded so that the material is bonded to the substrate.

Suitably the material to be bonded cures to form an elastomer, such as rubber.

In another aspect, there is provided process for bonding a first substrate to a second substrate, comprising the steps of:
a) providing a curable composition as defined herein;
b) applying the curable composition to at least one part of the surface of the first substrate; and
c) contacting said surface of the first substrate with a surface of a second substrate, to which the cured composition is optionally applied, under conditions of heat and pressure sufficient to create a cured bond between the two substrates.

Desirably, in this process the first substrate is an elastomer which is vulcanised or crosslinked prior to bonding to the second substrate. Suitably, the first substrate is a rubber, and the second substrate is a metal surface. The rubber may be vulcanised or crosslinked concurrently with bonding to the metal surface.

In another aspect the present invention relates to a process for bonding a first substrate to a second substrate, comprising the steps of:
a) providing an improved curable composition comprising a sulfur impregnated particulate solid or carbon black as defined herein;
b) applying the improved curable composition as defined herein to at least one part of the surface of the first substrate; and
c) contacting said surface of the first substrate with a surface of a second substrate, to which the improved curable composition as defined herein is optionally applied, under conditions of heat and/or pressure sufficient to create a cured or improved curable composition bond between the two substrates.

Suitably, the first substrate may be a rubber substrate which is vulcanised or crosslinked prior to bonding to the second substrate which is a metal surface.

The rubber may be vulcanised or crosslinked concurrently with bonding to the metal surface.

Prior to bonding, the surface of the metallic substrate may be cleaned according to one or more methods known in the art, such as degreasing, grit-blasting and zinc-phosphatizing.

In one embodiment of the process of the present invention the first substrate may be a metallic substrate or plastic substrate and/or the second substrate may comprises or consists of an elastomeric material, like polar elastomeric materials, such as nitrile butadiene rubber (NBR), hydrogenated nitrile butadiene rubber (HNBR) and/or ethylene acrylic elastomers and/or any combination or mixture thereof.

In step b) of the process described above, the improved curable composition of the invention may be applied to at least one part of the surface of the first substrate, e.g., to at least one part of the metallic surface by spraying dipping, brushing, and/or wiping. After the improved curable composition has been applied, it is preferred that the formed coating is permitted to dry. In some cases, it may be desirable to preheat the first substrate, such as the metallic substrate prior to application of the improved curable composition of the present invention to assist in drying of the improved curable composition. Particularly durable improved curable composition bonds are obtained when the improved curable composition of the present invention is applied in an amount sufficient to form a film having a film thickness in the range of 3 µm to 20 µm, more preferably of 6 µm to 12 µm.

Than in step c) of the process of the present invention the surface of the first substrate is contacted with the surface the second substrate, to which the improved curable composition is optionally applied, under conditions of heat and pressure sufficient to create an improved curable composition bond between the two substrates.

In a preferred embodiment of the present invention the improved bond between the two substrates is formed in step c) of the process of the present invention results from bringing the two substrates together under a pressure from 20 MPa to 200 MPa, preferably from 25 MPa to 50 MPa at a temperature from 100°C to 200°C, preferably from 160°C to 190°C. The formed assembly should preferably remain under the applied pressure and temperature for a period of time of 1 min to 60 min, more preferably for a period of time of 3 min to 20 min.

The conditions of heat and pressure sufficient to create an improved bond between the two substrates could vary depending on the chemical composition of the improved curable composition of the present invention and/or depending on the vulcanization rate of the elastomeric substrate. In one embodiment of the present invention the elastomeric substrate is vulcanized concurrently with bonding to the surface of the metallic substrate in step c) of the inventive process.

In an alternative embodiment the elastomeric substrate is already vulcanized prior to the bonding process, which means that substantially no vulcanization of the elastomeric substrates occurs in step c) of the process of the present invention.
Generally, it is desirable that bonding is achieved during the vulcanization of the elastomeric substrate.

The process of the present invention may be carried out by applying an elastomeric substrate as a semi-molten material to an improved curable composition coated metal surface as in, for example, an injection-molding process. The process of the present invention may also be carried out by utilizing compression molding, transfer molding or autoclave curing techniques. After the process is complete, a bonded assembly is formed, in which the fully vulcanized elastomeric material is bonded to a metallic substrate by the cured product of the inventive improved curable composition of the invention, which comprises the sulfur impregnated particulate solid described above.
Therefore, another aspect of the present invention is an article or assembly comprising at least two substrates bound together by the cured product of the improved curable composition of present invention.

The article of the present invention is preferably a bonded assembly which comprises at least one plastic or metallic substrate, especially metallic substrate bonded to at least one elastomeric substrate by the cured product of improved curable composition of the invention, wherein the elastomeric substrate is preferably selected from nitrile butadiene rubber (NBR), hydrogenated nitrile butadiene rubber (HNBR) and/or ethylene acrylic elastomers.

The article or bonded assembly of the present invention is ready for use in a final application including, but not limiting to, engine mount, damper, or belting. A further aspect of the present invention is the use of an improved curable composition of the present invention for bonding a first substrate to a second substrate, wherein one substrate is an elastomeric substrate. Suitable metallic substrates and suitable polymeric substrate, elastomeric substrates, and polar elastomeric substrates are described above.

### Examples:

To test the adhesion and the steam resistance buffers are prepared. Therefore, flat plate head screws (mild steel) are degreased with ethyl acetate, sandblasted and again cleaned with ethyl acetate. Afterwards for each example an adhesive having a composition according to the following tables is applied by spray application onto the screws and dried. The buffer is then produced with the rubber type "Gumasol NR60" with an injection mold having a temperature of 160 °C. To determine the adhesion the prepared buffer is tested in a tensile testing machine with a test speed of 100 mm/min. The results in MPa are listed for each adhesive in the following table.

For the "initial" value, the injection mold is directly closed and the rubber is vulcanized at 160 °C. After vulcanization, the buffer is removed and stored for 24 hours at room temperature before testing.

For the "prebake" value, the screws are kept 5 minutes at 160 °C before injecting the rubber into the mold. Afterwards the rubber is again vulcanized at 160 °C. And after vulcanization, the buffer is removed and stored for 24 hours at room temperature before testing.

For the "combi" value, the buffers prepared according to the "prebake" procedure are stored for 24 hours in a water steam chamber with a water steam temperature of 95°C with an applied stress of 20 % elongation. After removal from the water steam, the buffers are kept for 24 hours at room temperature without any stress before testing.

By comparison of the results of the comparative examples with the inventive examples that the steam resistance could drastically be improved. The buffers of the comparative examples fall already apart during the storage in the steam so that a testing of the adhesion is not possible. Additionally it can be recognized that the addition of a harder even improves the steam resistance.

| | Comp. 1 | Comp. 2 | Comp. 3 | Example 1 | Example 2 | Example 3 |
|---|---|---|---|---|---|---|
| 1-methoxy-2-propylacetate | 68,58 | 47,55 | 63,79 | 63,79 | | |
| Xylene | | 18,04 | | | 21,702 | 19,481 |
| Ethylacetate | 8 | 10,6 | | | 43,41 | 39,66 |
| Cellulose acetate butyrate¹ | | | | | | 0,5 |
| Phenoxy Resin² | 10 | 4,85 | 5 | 5 | | |
| Epoxy Resin³ | | | | | 5,98 | 6,5 |
| Glymo⁴ | 0,9 | 0,87 | 0,9 | 0,9 | 0,77 | 0,9 |
| BSU⁵ | 0,6 | 0,58 | 0,6 | 0,6 | 0,51 | 0,6 |
| Nitrososilan⁶ | 8 | 7,8 | 19 | 19 | 16,23 | 19 |
| Sulfur Release Agent⁷ | 2,5 | 2,43 | 2,5 | 2,5 | 2,13 | 2,5 |
| Carbon Black⁸ | | | | | | |
| Wollastonit | | | 7,5 | | | |
| Hydrophobic Fumed Silica⁹ | | 7,28 | | 7,5 | 6,4 | 7,5 |
| Blocked Isocyanate A¹⁰ | 1,42 | | 0,71 | 0,71 | | 3,28 |
| Blocked Isocyanate B¹¹ | | | | | 2,8 | |
| Blocked Isocyanate C¹² | | | | | | |
| Dicyandiamide | | | | | 0,062 | 0,072 |
| Dimethylphenylurea | | | | | 0,006 | 0,007 |
| | | | | | | |
| Summe | 100 | 100 | 100 | 100 | 100 | 100 |
| | | | | | | |
| Initial [MPa] | 8,4 | 10,0 | 8,1 | 8,7 | 10,4 | 9,8 |
| Prebake [MPa] | | 10,3 | 9,6 | 9,0 | 8,5 | 9,6 |
| Combi [MPa] | --- | --- | --- | 5,5 | 6,1 | 7,4 |

| | | | | | | |
|---|---|---|---|---|---|---|
| 1: Cellulose ester with high butyryl content and high viscosity (butyryl content 37 wt%; acetyl content 13.5 wt%; hydroxyl content 1.8 wt%) 2: Phenoxy resin based on bisphenol A with epichlorohydrin; Mn 13,000 g/mol; Mw 52,000 g/mol; Tg 92 °C (DSC); 3: solid reaction product of bisphenol A and epichorohydrin; Epoxide Equivalent Weight 2500 - 4000 g/mol; Tg 152 °C 4: Glymo = 3-Glycidoxyproplytrimethoxysilane 5: BSU = N,N-bis(3-trimethoxysilylpropyl)urea 6: Nitrososilan: 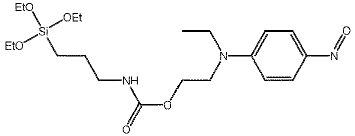 7: Sulfur impregnated Carbon Black of Desorex: 8: Carbon Black; BET 80 m²/g (ASTM D6556) 9: Hydrophobic Fumed Silica with a BET of 200 m²/g and a C-content of 2,3 to 3,2 % 10:HDI biuret blocked with dimethylpyrazole; equivalent weight (calculated) 410; NCO blocked 10,2%; 70% solids in methoxypropanol/ethyl acetate 11:HDI biuret blocked with diethyl malonate; equivalent weight (calculated) 477; NCO blocked 9,0 %; 70% solids in methoxypropanol 12:Blocked isocyanate based on HDI; equivalent weight (calculated) 470; NCO blocked 8,9 %; 70% solids in methoxypropylacetate | | | | | | |

| | Example 4 | Example 5 | Example 6 | Example 7 | Example 8 |
|---|---|---|---|---|---|
| 1-methoxy-2-propylacetate | | | | | |
| Xylene | 23,18 | 22,476 | 22,476 | 24,38 | 24,1 |
| Ethylacetate | 47,49 | 53,445 | 53,445 | 45,62 | 45,4408 |
| Cellulose acetate butyrate¹ | 0,5 | 0,5 | 0,5 | 0,5 | 0,5 |
| Phenoxy Resin² | | | | | |
| Epoxy Resin³ | 6,5 | 3 | 3 | 3 | 3 |
| Glymo⁴ | 0,9 | 0,9 | 0,9 | 0,9 | 1,13 |
| BSU⁵ | 0,6 | 0,6 | 0,6 | 0,6 | 0,75 |
| Nitrososilan⁶ | 8 | 8 | 8 | 12,5 | 12,2 |
| Sulfur Release Agent⁷ | 2,5 | 2,5 | | | |
| Carbon Black⁸ | | | | 4 | 4 |
| Wollastonit⁹ | | | | | |
| Hydrophobic Fumed Silica¹⁰ | 7,5 | 7,5 | 10 | 7,5 | 7,8 |
| Blocked Isocyanate A¹¹ | 2,83 | | | | |
| Blocked Isocyanate B¹² | | 1 | 1 | | |
| Blocked Isocyanate C¹³ | | | | 1 | 1 |
| Dicyandiamide | | 0,072 | 0,072 | | 0,072 |
| Dimethylphenylurea | | 0,0070 | 0,0070 | | 0,0072 |
| | | | | | |
| Summe | 100 | 100 | 100 | 100 | 100 |
| | | | | | |
| Initial [MPa] | 8,2 | 8,5 | 8,1 | 8,4 | 9,2 |
| Prebake [MPa] | 8,6 | 9,8 | 9,1 | 8,2 | 9,1 |
| Combi [MPa] | 3,2 | 9,4 | 7,5 | 1,8 | 8,4 |

## Claims

1. A curable composition comprising
a) at least one hydroxyl-group containing resin,
b) at least one nitroso-containing compound or at least one nitroso precursor compound,
c) at least one hydrophopic silica and
d) at least one blocked isocyanate.

2. The curable composition of claim 1, wherein the at least one hydroxyl group-containing resin is a non-halogenated hydroxyl group-containing resin, preferably selected from polyvinyl alcohol, polyvinyl butyral, polycellulose acetate butyrate, polyvinyl formal, polyamide, polyester, phenol resin, epoxy resin and phenoxy resin, preferably from epoxy resin and phenoxy resin.

3. The curable composition of claim 1 or 2, wherein the at least one hydroxyl group-containing resin is present in the composition in a range of from 1 to 20 wt%, preferably 2 to 15wt%, more preferably 2,5 to 10 wt% of the total weight of the curable composition.

4. The curable composition of any one of claims 1 to 3, wherein the hydroxy group-containing resin has a hydroxy content of from 1 to 35 wt% of the total weight of the hydroxy group-containing resin, especially from 2 to 30 wt%, preferably from 4 to 15 wt%:

5. The curable composition of any one of claims 1 to 4, wherein at least one nitroso-containing compound or at least one nitroso precursor compound is an aromatic nitroso-containing compound or an aromatic nitroso precursor compound, preferably an aromatic nitroso-containing compound.

6. The curable composition of claim 5, wherein the at least one aromatic nitroso compound or at least one aromatic nitroso precursor compound comprises at least one alkoxy silane moiety and at least one moiety selected from an aromatic nitroso or an aromatic nitroso precursor or combinations thereof.

7. The curable composition of any preceding claim, wherein the at least one nitroso-containing compound or at least one nitroso precursor compound is present in the composition in a range of from 1 to 30 wt%, preferably 3 to 25 wt%, more preferably 5 to 20 wt% of the total weight of the curable composition.

8. The curable composition of any preceding claim, wherein the hydrophopic silica is a hydrophopic fumed silica or the hydrophopic silica, especially the hydrophobic fumed silica, is present in the composition in a range of from 2 to 25 wt%, preferably 3 to 20 wt%, most preferably 5 to 15 wt% of the total weight of the curable composition.

8. The curable composition of any preceding claim, wherein the blocked isocyanate is present in the composition in a range of from 0,1 to 10 wt%, preferably 0,2 to 7 wt%, especially 0,3 to 5 wt%, most preferably 0,5 to 2 wt% of the total weight of the curable composition.

9. The curable composition of any preceding claim, wherein the curable composition contains additionally a sulfur impregnated particulate solid.

10. The curable composition of claim 9, wherein the sulfur impregnated particulate solid is selected from the group consisting of: sulfur-impregnated clays, sulfur impregnated silicates, sulfur impregnated aluminates, sulfur impregnated charcoals and sulfur impregnated carbons such as sulfur impregnated carbon blacks, sulfur impregnated charcoals and combinations thereof.

11. The curable composition of any preceding claim, wherein the curable composition contains additionally a carbon black.

12. The curable composition of any preceding claim, wherein the curable composition contains additionally an organic solvent.

13. The curable composition of any preceding claim, wherein the curable composition is a one-component system.

14. A process for bonding a first substrate to a second substrate, comprising the steps of:
a) providing a curable composition according to claim 1 to 13;
b) applying the curable composition to at least one part of the surface of the first substrate; and
c) contacting said surface of the first substrate with a surface of a second substrate, to which the curable composition is optionally also applied, under conditions of heat and pressure sufficient to create a cured bond between the two substrates.

15. An article or bonded assembly bonded together by the use of a curable composition according to claims 1 to 13 or achieved by the process according to claim 14.

## Patentansprüche

1. Härtbare Zusammensetzung, umfassend
a) mindestens ein hydroxylgruppenhaltiges Harz,
b) mindestens eine nitrosohaltige Verbindung oder mindestens eine Nitroso-Vorläufer-Verbindung,
c) mindestens eine hydrophobe Kieselsäure und
d) mindestens ein blockiertes Isocyanat.

2. Härtbare Zusammensetzung nach Anspruch 1, wobei das mindestens eine hydroxylgruppenhaltige Harz ein nichthalogeniertes hydroxylgruppenhaltiges Harz ist, vorzugsweise ausgewählt aus Polyvinylalkohol, Polyvinylbutyral, Polycelluloseacetatbutyrat, Polyvinylformal, Polyamid, Polyester, Phenolharz, Epoxidharz und Phenoxyharz, vorzugsweise aus Epoxidharz und Phenoxyharz.

3. Härtbare Zusammensetzung nach Anspruch 1 oder 2, wobei das mindestens eine hydroxylgruppenhaltige Harz in der Zusammensetzung in einem Bereich von 1 bis 20 Gew.-%, vorzugsweise 2 bis 15 Gew.-%, bevorzugter 2,5 bis 10 Gew.-%, des Gesamtgewichts der härtbaren Zusammensetzung vorliegt.

4. Härtbare Zusammensetzung nach einem der Ansprüche 1 bis 3, wobei das hydroxylgruppenhaltige Harz einen Hydroxygehalt von 1 bis 35 Gew.-%, insbesondere von 2 bis 30 Gew.-%, vorzugsweise von 4 bis 15 Gew.-% des Gesamtgewichts des hydroxylgruppenhaltigen Harzes aufweist.

5. Härtbare Zusammensetzung nach einem der Ansprüche 1 bis 4, wobei mindestens eine nitrosohaltige Verbindung oder mindestens eine Nitroso-Vorläuferverbindung eine aromatische nitrosohaltige Verbindung oder eine aromatische Nitroso-Vorläuferverbindung, vorzugsweise eine aromatische nitrosohaltige Verbindung ist.

6. Härtbare Zusammensetzung nach Anspruch 5, wobei die mindestens eine aromatische Nitrosoverbindung oder mindestens eine aromatische Nitrosovorläuferverbindung mindestens eine Alkoxysilaneinheit und mindestens eine Teilmenge umfasst, ausgewählt aus einem aromatischen Nitroso- oder einem aromatischen Nitrosovorläufer oder Kombinationen davon.

7. Härtbare Zusammensetzung nach einem der vorhergehenden Ansprüche, wobei die mindestens eine nitrosohaltige Verbindung oder mindestens eine Nitroso-Vorläuferverbindung in der Zusammensetzung in einem Bereich von 1 bis 30 Gew.-%, vorzugsweise 3 bis 25 Gew.-%, bevorzugter 5 bis 20 Gew.-% des Gesamtgewichts der härtbaren Zusammensetzung vorliegt.

8. Härtbare Zusammensetzung nach einem der vorhergehenden Ansprüche, wobei die hydrophobe Kieselsäure eine hydrophobe pyrogene Kieselsäure oder die hydrophobe Kieselsäure, insbesondere die hydrophobe pyrogene Kieselsäure, in der Zusammensetzung in einem Bereich von 2 bis 25 Gew.-%, vorzugsweise 3 bis 20 Gew.-%, am meisten bevorzugt von 5 bis 15 Gew.-% des Gesamtgewichts der härtbaren Zusammensetzung vorliegt.

8. Härtbare Zusammensetzung nach einem der vorhergehenden Ansprüche, wobei das blockierte Isocyanat in der Zusammensetzung in einem Bereich von 0,1 bis 10 Gew.-%, vorzugsweise 0,2 bis 7 Gew.-%, insbesondere 0,3 bis 5 Gew.-%, am meisten bevorzugt von 0,5 bis 2 Gew .-% des Gesamtgewichts der härtbaren Zusammensetzung vorliegt.

9. Härtbare Zusammensetzung nach einem der vorhergehenden Ansprüche, wobei die härtbare Zusammensetzung zusätzlich einen mit Schwefel imprägnierten teilchenförmigen Feststoff enthält.

10. Härtbare Zusammensetzung nach Anspruch 9, wobei der mit Schwefel imprägnierte teilchenförmige Feststoff ausgewählt ist aus der Gruppe, bestehend aus: schwefelimprägnierten Tonen, schwefelimprägnierten Silikaten, schwefelimprägnierten Aluminaten, schwefel-imprägnierten Kohlen und schwefelimprägnierten Kohlenstoffen wie schwefelimprägnierte Ruße, schwefelimprägnierte Kohlen und Kombinationen davon.

11. Härtbare Zusammensetzung nach einem der vorhergehenden Ansprüche, wobei die härtbare Zusammensetzung zusätzlich einen Ruß enthält.

12. Härtbare Zusammensetzung nach einem der vorhergehenden Ansprüche, wobei die härtbare Zusammensetzung zusätzlich ein organisches Lösungsmittel enthält.

13. Härtbare Zusammensetzung nach einem der vorhergehenden Ansprüche, wobei die härtbare Zusammensetzung ein Einkomponentensystem ist.

14. Verfahren zum Verbinden eines ersten Substrats mit einem zweiten Substrat, umfassend die Schritte:
a) Bereitstellen einer härtbaren Zusammensetzung nach Anspruch 1 bis 13,
b) Aufbringen der härtbaren Zusammensetzung auf mindestens einen Teil der Oberfläche des ersten Substrats, und
c) Inkontaktbringen der Oberfläche des ersten Substrats mit einer Oberfläche eines zweiten Substrats, auf die die härtbare Zusammensetzung wahlweise auch unter Hitze- und Druckbedingungen aufgebracht ist, die ausreichen, um eine gehärtete Verbindung zwischen den beiden Substraten zu erzeugen.

15. Gegenstand oder verbundene Anordnung, die durch Verwendung einer härtbaren Zusammensetzung nach den Ansprüchen 1 bis 13 miteinander verbunden oder durch das Verfahren nach Anspruch 14 erhalten werden.

## Revendications

1. Composition durcissable comprenant
a) au moins une résine contenant un groupe hydroxyl,
b) au moins un composé nitrosé ou au moins un composé précurseur nitrosé,
c) au moins une silice hydrophobe et
d) au moins un isocyanate bloqué.

2. Composition durcissable selon la revendication 1, dans laquelle l'au moins une résine contenant un groupe hydroxyl est une résine contenant un groupe hydroxyl non halogénée, de préférence sélectionnée parmi l'alcool polyvinylique, le butyral polyvinylique, le butyrate d'acétate polycellulose, l'acétobutyrate de polycellulose, le formal polyvinylique, le polyamide, le polyester, la résine phénolique, la résine époxy et la résine phénoxy, de préférence parmi la résine époxy et la résine phénoxy.

3. Composition durcissable selon la revendication 1 ou 2, dans laquelle l'au moins une résine contenant un groupe hydroxyl est présente dans la composition dans une plage comprise entre 1 et 20 % en poids, de préférence entre 2 et 15 % en poids, de manière davantage préférée entre 2,5 et 10 % en poids du poids total de la composition durcissable.

4. Composition durcissable selon l'une quelconque des revendications 1 à 3, dans laquelle la résine contenant un groupe hydroxy a une teneur hydroxy comprise entre 1 et 35 % en poids du poids total de la résine contenant un groupe hydroxy, en particulier entre 2 et 30 % en poids, de préférence entre 4 et 15 % en poids.

5. Composition durcissable selon l'une quelconque des revendications 1 à 4, dans laquelle au moins un composé nitrosé ou au moins un composé précurseur nitrosé est un composé nitrosé aromatique ou un composé précurseur nitrosé aromatique, de préférence un composé nitrosé aromatique.

6. Composition durcissable selon la revendication 5, dans laquelle l'au moins un composé nitrosé aromatique ou au moins un composé précurseur nitrosé aromatique comprend au moins une fraction d'alkoxysilane et au moins une fraction sélectionnée parmi un nitrosé aromatique ou un précurseur nitrosé aromatique ou des combinaisons de ceux-ci.

7. Composition durcissable selon une quelconque revendication précédente, dans laquelle l'au moins un composé nitrosé ou au moins un composé précurseur nitrosé est présent dans la composition dans une plage comprise entre 1 et 30 % en poids, de préférence entre 3 et 25 % en poids, de manière davantage préférée entre 5 et 20 % en poids du poids total de la composition durcissable.

8. Composition durcissable selon une quelconque revendication précédente, dans laquelle la silice hydrophobe est une silice pyrogénée hydrophobe ou la silice hydrophobe, en particulier la silice pyrogénée hydrophobe, est présente dans la composition dans une plage comprise entre 2 et 25 % en poids, de préférence entre 3 et 20 % en poids, de manière davantage préférée entre 5 et 15 % en poids du poids total de la composition durcissable.

8. Composition durcissable selon une quelconque revendication précédente, dans laquelle l'isocyanate bloqué est présent dans la composition dans une plage comprise entre 0,1 et 10 % en poids, de préférence entre 0,2 et 7 % en poids, en particulier entre 0,3 et 5 % en poids, de manière davantage préférée entre 0,5 et 2 % en poids du poids total de la composition durcissable.

9. Composition durcissable selon une quelconque revendication précédente, dans laquelle la composition durcissable contient en outre un solide particulaire imprégné de soufre.

10. Composition durcissable selon la revendication 9, dans laquelle le solide particulaire imprégné de soufre est sélectionné parmi le groupe composé de : argiles imprégnées de soufre, silicates imprégnés de soufre, aluminates imprégnés de soufre, charbons de bois imprégnés de soufre, et carbones imprégnés de soufre tels que des noirs de carbone imprégnés de soufre, des charbons de bois imprégnés de soufre et des combinaisons de ceux-ci.

11. Composition durcissable selon une quelconque revendication précédente, dans laquelle la composition durcissable contient en outre un noir de carbone.

12. Composition durcissable selon une quelconque revendication précédente, dans laquelle la composition durcissable contient en outre un solvant organique.

13. Composition durcissable selon une quelconque revendication précédente, dans laquelle la composition durcissable est un système monocomposant.

14. Procédé de liaison d'un premier substrat à un second substrat, comprenant les étapes de :
a) fourniture d'une composition durcissable selon la revendication 1 à 13 ;
b) application de la composition durcissable à au moins une partie de la surface du premier substrat ; et
c) mise en contact de ladite surface du premier substrat avec une surface d'un second substrat, à laquelle la composition durcissable est facultativement également appliquée, dans des conditions de chaleur et de pression suffisantes pour créer une liaison durcie entre les deux substrats.

15. Article ou ensemble lié lié ensemble à travers l'utilisation d'une composition durcissable selon les revendications 1 à 13 ou obtenu grâce au procédé selon la revendication 14.
